# EUROPEAN PATENT APPLICATION

(11) **EP 2 560 079 A1**
(43) Date of publication of application: **20.02.2013**
(21) Application number: 11768871.3
(22) Date of filing: 13.04.2011
(51) Int. Cl.: G06F 3/042, G06F 3/041, G06F 3/16

(54) **HANDWRITING INPUT BOARD AND INFORMATION PROCESSING SYSTEM USING A HANDWRITING INPUT BOARD**

(30) Priority: 13.07.2010 JP 2010159142; 13.04.2010 JP 2010091922
(71) Applicant: Yoshida, Kenji, Bunkyo-ku, Tokyo 112-0002 (JP)
(72) Inventor: Yoshida, Kenji, Bunkyo-ku, Tokyo 112-0002 (JP)
(74) Representative: Klunker . Schmitt-Nilson . Hirsch
(86) International application number: PCT/JP2011/059134
(87) International publication number: WO 2011/129350

(57) **Abstract**

Disclosed is a simple, inexpensive handwriting input board whereby handwritten characters or the like can be erased, and furthermore, erased characters or the like can be stored. The handwriting input board is provided with: a display panel provided with a writing area in which dot patterns, in which coordinates and/or code values are repeatedly defined, are arranged; and a scanner pen which can be used to draw on or touch the display panel to draw a trail. The scanner pen is provided with: an optical reading unit that optically reads the dot pattern provided on the display panel; and a dot code analysis unit. When the scanner pen is used to draw on or touch the display panel, the scanner pen sequentially images the dot pattern, the dot code analysis unit analyzes the dot pattern and outputs coordinates and/or code values, and a trail is displayed visibly on the display panel. The handwriting input board is also provided with an erasure unit for erasing the displayed trail.

## Description

### FIELD OF THE INVENTION

The present invention relates to a handwriting input board provided with a dot pattern thereon and an information processing system using the handwriting input board.

### BACKGROUND OF THE INVENTION

There have been conventionally known magnetic boards that use magnetophoresis display panels. In such magnetic boards, when a magnetic pen draws on the surface of the substrate of the front side of the magnetophoresis display panel, magnetic particles that are sucked by the magnetic force of the magnetic pen migrate from the substrate of the reverse side to reach the substrate of the front side to form a black-and-white display using differences in contrast of the dispersed fluid and magnetic particles. It is also possible to display in color by coloring the magnetic particles (Japanese Utility Model Publication No. 3047170).

Further, recently, electronic papers have been widely used. The electric paper is a display medium that retains viewability and portability as a merit of paper media and can electrically rewrite displayed contents. There has been proposed a handwriting input device in which when a transparent EL (electroluminescence) sheet is set on this electronic paper, and a user inputs a handwriting by hand using the pen, the control unit equipped in the operation unit displays the handwriting on the transparent EL sheet based on the handwriting data. This handwriting input device displays the handwriting by applying alternating pulse voltage to the transparent electrode at a position of the transparent EL sheet corresponding to the handwriting. When the set electronic paper (a copy) is detected to be changed to other copy, application of the alternating pulse voltage stops, and all the displayed handwriting can be quickly and easily erased. Also, the handwriting data can be stored in a memory of the operation unit (Japanese Unexamined Patent Application Publication No. 2008-117283).

Meanwhile, there have been utilized expensive handwriting input systems, in which, a touch panel or a touch sheet are provided on a display such as a liquid crystal monitor that works with a PC (Personal Computer) and, when a pen such as a stylus pen is used to draw on the touch panel or the touch sheet, the handwriting can be displayed and stored.

Further, there have been utilized input devices in which a scanner pen that is equipped with a writing material such as a ballpoint pen on the leading end thereof is used to write in a special handwriting input form which is printed with dot patterns that define X and Y coordinates, and the scanner pen can store and transmit the trail information (Japanese Unexamined Patent Application Publication No. 2007-279822, Japanese Patent Publication No. 4385169).

### SUMMARY OF THE INVENTION

### Problems that the Invention is to Solve

However, in the magnetic board (a color picture drawing toy) of Japanese Utility Model Publication No. 3047170, once a picture, a text, and the like drawn by the magnetic pen is erased, the drawing cannot be saved at all. For this reason, there is a problem of lacking flexibility in which the drawing cannot be stored even if it is desired to be stored.

Meanwhile, in the handwriting input device of Japanese Unexamined Patent Application Publication No. 2008-117283, while the handwriting data can be stored, the transparent EL sheet is very expensive, and a dedicated operation unit is required. For this reason, there is a problem in which costs and time are required to produce the handwriting input device.

Also, there is a downside in the touch panel that works with a PC, that the touch panel is large, heavy, and costly. While iPad of Apple Co., Ltd. has become available recently and thin and light touch panel style computers with an area appropriate for handwriting input have become available, these are still expensive.

Further, while the handwriting input devices of Japanese Unexamined Patent Application Publication No. 2007-279822 and Japanese Patent Publication No. 4385169 are simple and inexpensive, there is a problem in which texts and figures written in the special form cannot be quickly erased, and, even if these could be erased, some marks remain, and so, highly confidential information, personal information, and the like should be disposed each time using a shredder or the like.

The present invention is devised in consideration of such problems, and can erase handwritten texts and the like. Further, the invention has a technical subject of simply and inexpensively providing a handwriting input board that can store erased texts and the like.

### Means to Solve the Problems

(1) To solve the above problems, the handwriting input board of the invention comprises: a display panel on at least some area of which is arranged a dot pattern where coordinate values and/or code values are repeatedly defined, at least part of the some area being provided with a writing area; and a scanner pen that draws a trail by drawing or touching on the display panel, wherein the scanner pen, by comprising an optical reading unit that optically reads the dot pattern provided on the display panel and a dot code analysis unit, sequentially images the dot pattern by drawing or touching on the display panel, analyzes the dot pattern by the dot code analysis unit, outputs the coordinate values and/or code values, visibly displays the trail that is made by drawing or touching by the scanner pen on the display panel in accordance with a predetermined display method, and comprises an erasure unit to erase the displayed trail.

According to this, it is possible to simply and inexpensively provide a handwriting input board that can repeatedly write and erase by drawing thereon using the special scanner pen and can output the written trail. Further, by erasing quickly after writing highly confidential information, personal information, and the like, confidentiality can be retained.

(2) Further, the dot pattern arranged on the at least some area defines a code value for identifying the display panel in a predetermined area or a whole area.

According to this, the handwriting input board can be easily identified. The handwriting board according to this invention can identify which handwriting input board is written in when one scanner pen is used to draw trails on a plurality of handwriting input boards.

(3) Further, the dot pattern arranged on the at least some area defines a code value that is associated with an instruction command and/or information in a predetermined area.

According to this, after inputting texts, pictures, and the like in the writing area, it is possible to easily perform transmitting to the transmission unit, storing in the storage unit, and a variety of operations other than handwriting input.

(4) Further, on the display panel, the dot pattern that is printed with an ink that absorbs infrared light is arranged at least in an area where the dot pattern is arranged, and an area other than a dot portion where the dot pattern is formed reflects infrared light, and the optical reading unit comprises: an infrared irradiation unit that irradiates infrared light of a predetermined wavelength; an infrared filter that transmits only infrared light of a predetermined wavelength range; and a sensor that can image at least the transmitted infrared light, and images the dot pattern formed on the display panel.

According to this, when infrared light is irradiated to the display panel, the part where dot patterns are formed absorbs infrared light and does not reflect the infrared light. On the other hand, the part where dot patterns are not formed does not absorb infrared light and reflects the infrared light. This reflected light enters into the lens and only the dot patterns that do not emit reflected light are imaged in black, enabling to read the dot patterns.

Also, by providing an infrared filter, visible light emitted from the part where the dot patterns are not formed is shut off and only infrared light can be entered into the lens.

(5) Further, on the display panel, an image is superimposingly printed on the dot pattern with an ink that reflects or transmits infrared light.

In this way, by printing dot patterns using an ink that absorbs infrared light and printing images using an ink that reflects or transmits infrared light, only the dot patterns can be read out without being affected by the images.

(6) Further, the display panel is attached with an information input assistance sheet in which: a dot pattern layer in which the dot pattern is arranged on either one surface side of a transparent sheet is provided; and, if the dot pattern layer is provided on the other side of the display panel side, a protection layer having a characteristic of transmitting infrared light and visible light is laminated on the transparent sheet.

According to this, dot patterns are not necessarily directly formed on the display panel. Thus, the handwriting input board of the invention can be produced only by attaching the information input assistance sheet to a conventional display panel, enabling to realize the invention extremely easy and inexpensively.

Also, by providing a protection layer, wear and stain of the dots can be prevented and the sheet can be used for longer period.

(7) Further, the display panel is attached with an information input assistance sheet in which: a dot pattern layer in which the dot pattern is arranged on either one surface side of a transparent sheet is provided; if the dot pattern layer is provided on the display panel side, the infrared reflection layer is laminated on an upper side of the dot pattern layer, and if the dot pattern layer is provided on the other side of the display panel side, the infrared reflection layer is laminated on a lower side of the dot pattern layer, and a protection layer that has a characteristic of transmitting infrared light and visible light is laminated on the transparent sheet on the upper side of the dot pattern layer.

According to this, as the display panel attached with the information input assistance sheet reflects infrared light irradiated from the infrared irradiation unit without the characteristic of absorbing/transmitting infrared light being affected, only bright and clear dot patterns can be imaged, enabling to accurately analyze the dot codes.

(8) Further, the infrared reflection layer is an infrared diffuse-reflection layer.

With general infrared reflection layers, in some cases, infrared light irradiated off the infrared reflection layer is specularly reflected, generating an area where infrared light does not enter the lens in the imaging area (a phenomenon that occurs when perpendicularly standing the scanner pen, the center of the imaging area is imaged in black, and the dot pattern cannot be imaged in full). Using the infrared diffuse-reflection layer, infrared light can evenly enter the lens.

(9) Further, the display panel is provided with a magnetophoresis display panel in which dispersed fluid comprising magnetic particles and dispersed medium are enclosed, at least part of the magnetophoresis display panel is the writing area, a trail drawn by the scanner pen provided with a magnet on a leading end thereof is displayed by migration of the magnet particles, and the erasure unit erases the trail drawn on the writing area by migration of the magnetic particles by tracing with a magnetic eraser from the reverse side of the magnetophoresis display panel.

(10) Further, the magnetophoresis display panel is formed with at least one microcapsule magnetophoresis display sheet.

According to this, an ultra thin handwriting input board that can be repeatedly written in and erased, can be easily and inexpensively realized. Also, an erasure unit may be separately provided. In this way, a plurality of microcapsule magnetophoresis display sheets can be bound to carry around and can be erased by a separate erasure unit.

(11) Further, at least two of the microcapsule magnetophoresis display sheets are bound by a predetermined method.

(12) Further, the magnetic particles are colored with luminescent material.

According to this, when light is irradiated using an electrical torch or the like, the written texts shine, thus, the written texts, etc. can be read even in a dark place.

As luminescent material, silicate phosphors, silicate and aluminate phosphors, and the like may be used.

(13) Further, the display panel is provided with an electrophoresis display panel in which dispersed fluid comprising pigment particles and dispersed medium is enclosed, at least part of the electrophoresis display panel is the writing area, a trail drawn or touched by the scanner pen provided with an electrode on a leading end thereof is displayed by migration of the pigment particles, and the erasure unit erases the trail drawn on the writing area by migration of the pigment particles by applying voltage.

(14) Further, the electrophoresis display panel is formed with at least one microcapsule electrophoresis display sheet.

According to this, handwriting can be performed with finer and clearer texts than the magnetophoresis display panel.

(15) Further, infrared reflecting particles are included in the dispersed fluid to diffusely reflect infrared light.

According to this, without separately providing a layer for diffusely reflecting infrared light on the display panel or the information input assistance sheet, infrared light irradiated from the infrared irradiation unit can be diffusely reflected and evenly enter the lens of the optical reading unit.

(16) Further, the scanner pen, by further comprising a trail information generation unit, distinguishes whether coordinate values and/or code values read from a trail drawn by drawing on or touching the display panel by the scanner pen are a trail made by drawing on or touching the writing area or other area by the dot code analysis unit, and, if the trail is made in the writing area, generates trail information by the trail information generation unit.

According to this, by analyzing coordinate values and/or code values of dot patterns provided on the display panel, whether the area where the trail is drawn is the writing area or other area can be recognized. Then, only when the area where the trail is drawn is the writing area, the trail information can be generated.

(17) Further, the scanner pen, by further comprising a storage unit, stores the trail information in a storage medium by the storage unit.

According to this, the trail information can be stored even after erasing the trail.

(18) Further, the scanner pen, by further comprising a transmission unit, transmits the trail information to an information processing device by the transmission unit.

According to this, it is possible to store the trail information in the information processing device, and, further, to display the trail information on the display connected with the information processing device (a personal computer and the like), or to analyze the trail information to recognize texts and figures.

(19) Further, the scanner pen further comprises a sound recognition unit that transmits the trail information to the information processing device by the transmission unit when recognizing a predetermined sound, and comprises a sound generation unit that generates the predetermined sound when erasing the trail corresponding to the trail information by the erasure unit.

According to this, a user can transmit the trail information to the information processing device only by causing to generate a sound when erasing the trail information. Thus, the user can easily transmit and store the required trail information to the information processing device without performing a complicated operation such as pressing buttons many times.

It should be noted that generation of the sound may be caused either by an electric mechanism or a physical mechanism. It will be appreciated that the scanner pen can electronically recognize the sound that is generated without using an electric power at all. If the sound is generated by a physical mechanism, as an electric/electronic mechanism is not required on the handwriting input board side, the handwriting input board can be easily and inexpensively provided.

(20) Further, the handwriting input board comprises a slide mechanism; and a unit that enables to visibly erase a trail of the scanner pen by operation of the slide mechanism as well as generates an operation sound of a predetermined frequency of the slide mechanism, and the scanner pen, when it detects the operation sound of the predetermined frequency, transmits the trail information to the information processing device via the transmission unit, whereby it is made it possible to visibly erase the trail as well as to transmit trail information from the scanner pen without providing an electronic mechanism on the handwriting input board side.

According to this, while the trail of the scanner pen is being visibly erased, operation of the slide mechanism produces an operation sound. Depending on the frequency of this operation sound, the erased area can be recognized and only the trail information of the area can be transmitted.

(21) Further, the sound generation unit comprises a physical button for generating or not generating a collision sound of the slide mechanism.

According to this, selective processing can be easily performed, such as, when the trail information is desired to be transmitted to the information processing device, a collision sound is generated, and, when the trail information is desired to be erased without transmitting, the collision sound is not generated.

(22) Further, the handwriting input board comprises a physical catching part for the slide mechanism, the sound generation unit generates a predetermined sound that is associated with a region where the trail to be erased by the erasure unit is displayed, the sound recognition unit recognizes the predetermined sound and transmits the trail information corresponding to the trail displayed in the region associated with the sound to the information processing device via the transmission unit.

According to this, based on a predetermined sound, the erased region can be recognized and only the trail information of the region can be transmitted.

(23) Further, the scanner pen, by further comprising an output unit, distinguishes whether coordinate values and/or code values read from a trail drawn by drawing on or touching the display panel by the scanner pen are a trail made by drawing on or touching the writing area or other area by the dot code analysis unit, and, if the trail is made in an area other than the writing area, outputs/displays a sound and/or an image corresponding to the coordinate values and/or code values by the output unit.

According to this, by drawing or touching with the scanner pen and reading and analyzing the trail, if the area is other than the writing area, sounds and images corresponding to the trail can be output/displayed. The invention can be utilized not only for inputting handwriting but also as an input and output device of related information.

(24) Further, by further comprising the trail information analysis unit, if the trail is made in the writing area, the scanner pen generates trail information by the trail information generation unit, analyzes the trail information by the trail information analysis unit, and outputs/displays a corresponding sound and/or image by the output unit.

According to this, without transmitting trail information to an information processing device, the trail information can be analyzed and corresponding information can be output only with the scanner pen, providing a highly useful handwriting input board.

(25) Further, the scanner pen, after touching a predetermined area other than the writing area, draws an arbitrary number and/or symbol on the writing area, which is erased by the erasure unit, and, subsequently, draws a trail on the writing area, whereby the trail information generation unit generates the trail information with the trail and the predetermined number and/or symbol as an index.

According to this, the trail information can be easily searched and output.

(26) Further, the scanner pen is provided with, instead of the erasure unit equipped on the handwriting input board, an erasure unit for erasing a trail displayed on the display panel to erase part or all of the trail.

(27) Further, the scanner pen is provided with the eraser (a magnetic eraser) on a side edge opposite to the optical reading unit and/or a middle part thereof to erase part of or the entire trail.

(28) Further, the scanner pen is provided with the eraser on a side edge opposite to the optical reading unit and/or a middle part thereof to enable erasing part of or the entire trail.

According to this, the whole area drawn by the scanner pen can be erased using the middle part of the scanner pen, and only part of the area can be erased using the opposite side edge of the scanner pen. Further, as the handwriting input board does not have to be equipped with the erasure unit, it is possible to easily and inexpensively produce thin sheet type handwriting input boards that can be utilized by bounding a plurality thereof and carrying around with excellent portability.

(29) Further, the scanner pen is waterproofed.

According to this, it is possible to provide a tough scanner pen that does not break even when wet with rain or left at a wet place. Also, as often used in scuba diving, the invention can be utilized as a communication board in which information drawn thereon in the sea can be stored, and the information can be output later on shore, which can double the enjoyment as well as accurately store the information.

(30) The information processing system using the handwriting input board of the invention comprises: a display panel on at least some area of which is arranged a dot pattern where coordinate values and/or code values are repeatedly defined, at least part of the some area being provided with a writing area; a handwriting input board equipped with an erasure unit for erasing a trail displayed on the display panel; a scanner pen comprising: an optical reading unit for optically reading the dot pattern provided on the display panel; a dot code analysis unit for analyzing the dot pattern and outputting the coordinate values and/or code values; a trail information generation unit that generates trail information from the coordinate values or the coordinate values and code values analyzed by the dot code analysis unit; and a transmission unit that transmits the trail information or the coordinate values and/or code values; and an information processing device that is wiredly or wirelessly connected with the scanner pen and comprises a trail information analysis unit for analyzing the trail information, wherein the optical reading unit sequentially images the dot pattern provided on the display panel by drawing a trail by drawing or touching on the display panel by the scanner pen, the dot code analysis unit analyzes the dot pattern and outputs the coordinate values and/or code values, the display panel displays the trail, the trail information generation unit generates the trail information from the coordinate values and/or code values drawn on the writing area, the transmission unit transmits the trail information or the coordinate values and/or code values to the information processing device, and the information processing device recognizes the trail information by the trail information analysis unit, executes an instruction command corresponding to the recognition or the coordinate values and/or code values and/or outputs associated information.

According to this, only by writing by hand an instruction command that is desired to be executed and information that is desired to be input and output on the handwriting input board and transmitting them to the information processing device, the corresponding instruction command can be executed and corresponding information can be input and output. Therefore, without performing complicated operations such as inputting on a keyboard, a processing desired by a user can be performed.

(31) Further, when the storage device is mounted, the information processing unit executes an instruction command or outputs multi-media information corresponding to the coordinate values and/or code values.

According to this, even in a situation where the scanner pen cannot perform transmission processing to the information processing device by wired or wireless means, an instruction command corresponding to the trail information can be executed and corresponding information can be output from the information processing device.

(32) The information processing system using the handwriting input board of the invention, comprises: a plurality of handwriting input boards each comprising: a display panel on at least some area of which is arranged a dot pattern where coordinate values and/or code values are repeatedly defined, at least part of the some area being provided with a writing area; and an erasure unit for erasing a trail displayed on the display panel; a plurality of scanner pens each comprising: an optical reading unit for optically reading the dot pattern provided on the display panel; a dot code analysis unit for analyzing the dot pattern and outputting the coordinate values and/or code values; a trail information generation unit that generates trail information from the coordinate values or the coordinate values and code values analyzed by the dot code analysis unit; and a transmission unit that transmits the trail information or the coordinate values and/or code values; and one or a plurality of information processing devices that are wiredly or wirelessly connected with the scanner pens, each of the information processing device comprising a trail information analysis unit for analyzing the trail information, wherein the information processing device recognizes the trail information transmitted from the transmission unit of any one of the scanner pens and ID of the scanner pen, recognizes the trail information, executes an instruction command corresponding to the coordinate values and/or code values, and/or outputs associated information.

According to this, the system can be configured as a thin client in which, when a user of the pen scanner inputs a variety of information or instructs operations to the information processing device that is connected with a plurality of scanner pens, the information processing device performs processing according to the ID of the scanner pen. For example, in a meeting for brainstorming, if each attendee brings a scanner pen and a handwriting input board, and writes by hand with the scanner pen to make a remark, who made the remark is recognized. Thus, each attendee is not required to bring a computer, which makes the meeting very simple and convenient.

(33) Further, the dot pattern is formed by arranging a plurality of stream dot patterns arrayed in accordance with the steps of: disposing a plurality of reference dots sequentially in a line in accordance with a predetermined rule; providing a first virtual reference line that comprises a straight line, a polygonal line and/or a curved line that connects the plurality of reference dots; providing at least one second virtual reference line that is defined at a predetermined position from the reference dots and/or the first virtual reference line and comprises a straight line and/or a curved line; providing a plurality of virtual reference points at predetermined positions on the second virtual reference line; and disposing an information dot that defines X and Y coordinate values and/or a code value by a distance and a direction from the virtual reference point, at an end point of a vector expressed with the virtual reference point as a start point.

According to this, handwriting input is made possible by arraying and forming a plurality of stream dot patterns having certain intervals of reference points, and generating trail information on X and Y coordinate values that are tightly defined in the writing area. Further, when texts, staff notations, maps, figures, and the like are printed on the handwriting input board, and the scanner pen is used to operate by drawing on or touching the line segments, dot patterns can be effectively arranged by forming stream dot patterns only along the line segments. Also, without being restricted to the shape of a rectangular area when dot patterns that define X and Y coordinates are formed as two-dimensional code (used as an index), the dot patterns in which a set of certain information is repeated can be formed in a flexible shape tailored to the information area that is visibly formed on a medium surface.

(34) Further, in the stream dot, a reference dot is further provided at a predetermined position, which is a further reference for defining the second virtual reference line and/or defining a direction of the dot pattern and a set of X and Y coordinate values and/or a code value.

According to this, by providing a new reference point, the orientation of the stream dot pattern and the set of certain information can be easily defined without using an information dot, which suppresses unnecessary decrease of information. Further, by arranging a new reference point, the position of a virtual reference point that is a start point of the information dot can be accurately indicated.

### ADVANTAGEOUS EFFECT OF THE INVENT

According to the invention, it is possible to easily and inexpensively provide the handwriting input board that is provided with the scanner pen that can repeatedly write and erase, and store and transmit the written text and the like.

### BRIEF DESCRIPTION OF THE DRAWINGS

FIG. 1 is a diagram illustrating a use status of the handwriting input board of the invention.
FIG. 2 is a front view showing a configuration of the handwriting input board.
FIG. 3 is an enlarged view showing a configuration of the pen tip of the scanner pen used in the invention.
FIG. 4 is an explanatory diagram showing an example of a dot pattern of GRID1.
FIGS. 5A and 5B are enlarged views showing examples of information dots of the dot pattern of GRID1.
FIG. 6 is an explanatory diagram showing a dot pattern format of GRID1.
FIG. 7 is examples of information dots of GRID1 and bit expression of data defined therein, which shows another embodiment.
FIGS. 8A to 8C are examples of information dots of GRID1 and bit expression of data defined therein. FIG. 8A is a diagram in which two dots are arranged. FIG. 8B is a diagram in which four dots are arranged. FIG. 8C is a diagram in which five dots are arranged.
FIGS. 9A to 9D show variants of the dot pattern of GRID1. FIG. 9A is a schematic view of six information dot arrangement. FIG. 9B is a schematic view of nine information dot arrangement. FIG. 9C is a schematic view of 12 information dot arrangement. FIG. 9D is a schematic view of 36 information dot arrangement.
FIGS. 10A to 10C are explanatory diagrams showing dot patterns of direction dots.
FIGS. 11A to 11C are diagrams that illustrate a method for forming a stream dot pattern (1).
FIGS. 12A and 12B are diagrams that illustrate a method for forming a stream dot pattern (2).
FIGS. 13 is a diagram that illustrates a method for forming a stream dot pattern (3).
FIGS. 14A and 14B are diagrams showing an example in which the first virtual reference line is provided as a Bezier curve.
FIGS. 15A to 15C are diagrams illustrating the formats of dot patterns provided on the display panel.
FIGS. 16A to 16E are diagrams illustrating the information input assistance sheet used in the invention.
FIGS. 17A and 17B are diagrams illustrating a magnetophoresis display panel as an embodiment of the display panel.
FIGS. 18A and 18B are diagrams illustrating a microcapsule magnetophoresis display sheet as an embodiment of the display panel.
FIGS. 19A to 19C are diagrams illustrating a microcapsule electrophoresis display sheet as an embodiment of the display panel.
FIG. 20 is a block diagram illustrating a scanner pen having a trail information generation unit.
FIG. 21 is an explanatory diagram showing a state in which a scanner pen that has a sound generation unit is used.
FIGS. 22A and 22B are an explanatory diagram and a block diagram showing a configuration of the scanner pen that has a sound generation unit.
FIG. 23 is a block diagram illustrating the scanner pen that has a trail information analysis unit.
FIGS. 24A to 24C are perspective views illustrating the scanner pen that has an erasure unit.
FIGS. 25A and 25B are explanatory diagrams showing the handwriting input board on which an erasure unit is fixed.
FIGS. 26A to 26F are explanatory diagrams showing the handwriting input board that transmits to the information processing device by generating a sound (1).
FIGS. 27A and 27B are explanatory diagrams showing the handwriting input board that transmits to the information processing device by generating a sound (2).
FIGS. 28A to 28C are explanatory diagrams showing the handwriting input board that transmits to the information processing device by generating a sound (3).
FIGS. 29A and 29B are explanatory diagrams showing the handwriting input board that transmits to the information processing device by generating a sound (4).
FIG. 30 is an explanatory diagram showing an information processing system that uses the handwriting input board.
FIG. 31 is an explanatory diagram showing a thin client system using the handwriting input board.
FIGS. 32A to 32D are explanatory diagrams showing a handwriting input board that is equipped with an icon area.
FIGS. 33A to 33C are explanatory diagrams showing a handwriting input board for an examination.
FIGS. 34A to 34D are explanatory diagrams showing a booklet style handwriting input board.

### BEST MODE FOR CARRYING OUT THE INVENTION

The following describes the embodiments of the invention with reference to the drawings.

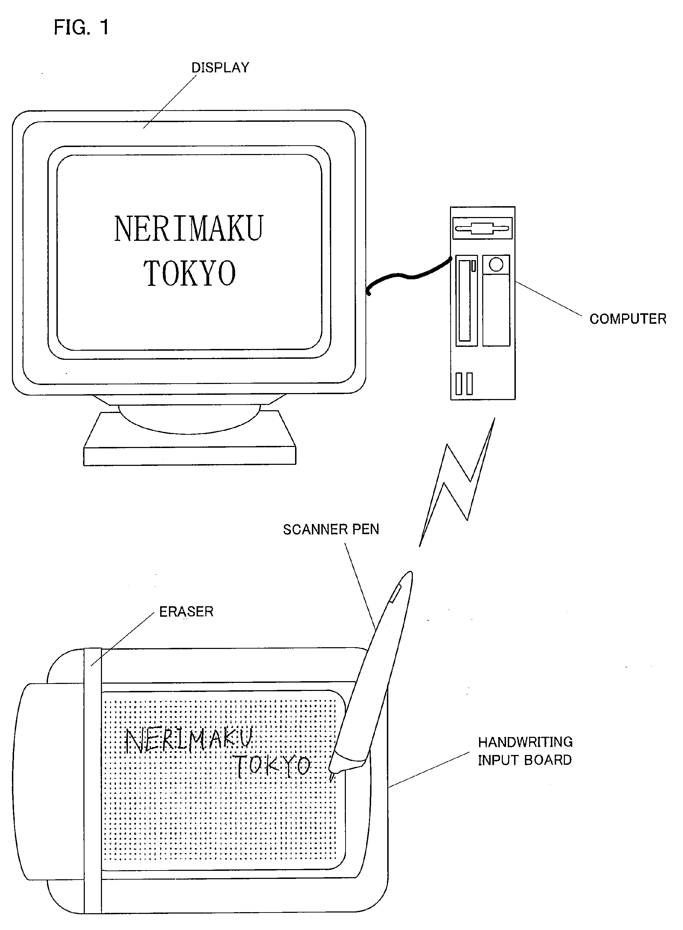

FIG. 1 is an external view showing an example of a use state of the handwriting input board of the invention. According to FIG. 1, when the handwriting input board is written in by drawing thereon using the scanner pen, the written text is visibly displayed on a display panel of the handwriting input board. Further, when a user performs a predetermined operation, the text just as written in is displayed on the display. This is realized when the scanner pen images and analyzes the dot patterns on the written trail, and transmits the analyzed trail information to a computer.

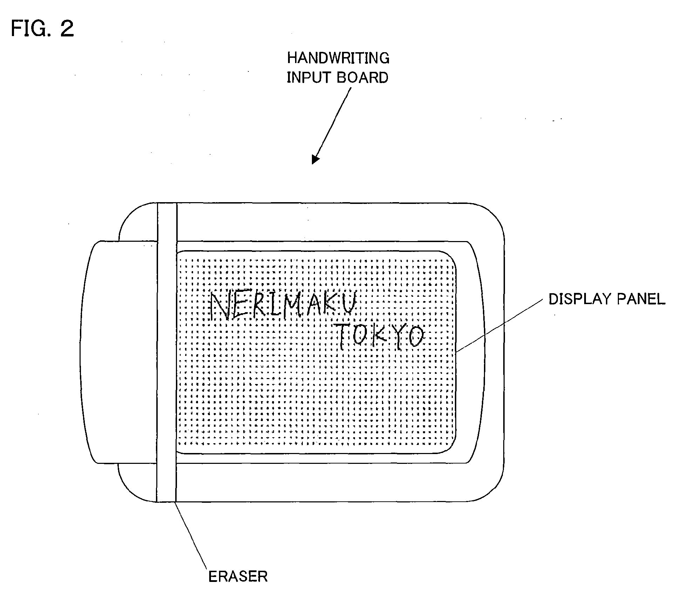

FIG. 2 is a diagram showing a configuration of the handwriting input board.

This handwriting input board is configured by a display panel and an eraser (an erasure unit). For the display panel, while the details are described later, a magnetophoresis display panel or electrophoresis display panel is used. Also, dot patterns, which will be described later, are provided on the display panel.

The eraser is for erasing texts and drawing patterns that are written on the display panel. When the magnetophoresis display panel is used, permanent magnet is used for the eraser. The eraser is slid along the reverse surface of the display panel. Then, the magnetic particles drawn to the front surface of the display panel migrate to the reverse surface of the panel, whereby, when seen from the front surface side of the panel, only the color of the dispersed fluid is seen, and the display of the text, etc. appears to be erased.

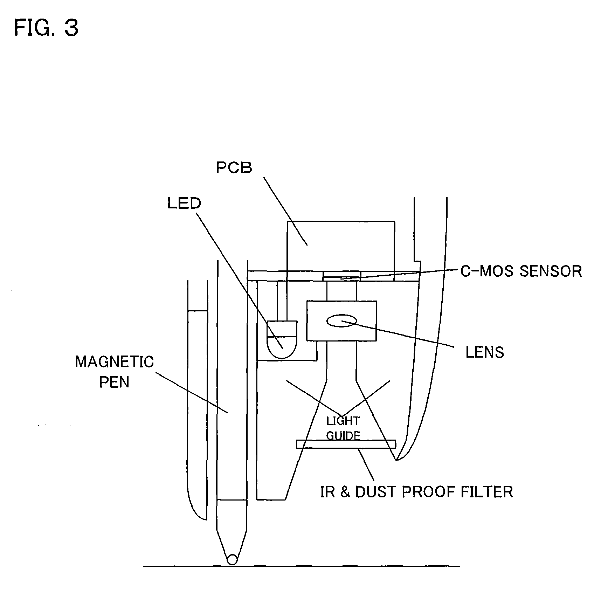

FIG. 3 is a section view showing the leading end of the scanner pen. Such a scanner pen comprises a hollow portion formed inside, a light guide that has an opening at the leading end, a lens that is arranged at a position facing the opening of this light guide, an LED as a light source that is disposed in plane with this lens and irradiates light of a predetermined wavelength on the medium surface on which dot patterns are formed, a C-MOS sensor (an optical reading unit) that is arranged at a position receded from the lens, a PCB at a position that is further receded therefrom, and a CPU that is mounted on the PCB yet not shown in FIG. 3. The hollow portion of the light guide is formed in a tapered shape where the hollow portion has larger diameter gradually from the lens toward the opening. Here, the CPU plays any one or all roles of the dot pattern analysis unit, trail recognition unit, processing instruction unit, and information processing device that will be described later.

The light guide is made of transparent or opaque white resin, and the inner side thereof functions as a light conductor. The irradiation light from LED proceeds through the inner side of the light guide, and is irradiated a medium from the opening portion. If the light guide is made of opaque white resin, as the irradiated light from LED is appropriately diffused when going through the light guide which functions as a diffuser, the light from the opening portion can be more evenly irradiated the medium.

It should be noted that the scanner pen may be waterproofed. As a method for waterproof processing, the opening portion at the leading end is covered with a transparent plate (glass, etc.), and other parts are waterproofed by the same method that is performed for waterproofed mobile telephones, portable music players, and the like.

By waterproofing, it is possible to provide a tough scanner pen that does not break even when wet with rain or left at a wet place. Also, as often used in scuba diving, the invention can be utilized as a communication board in which information drawn thereon in the sea can be stored, and the information can be output later on shore, which can double the enjoyment as well as accurately store the information.

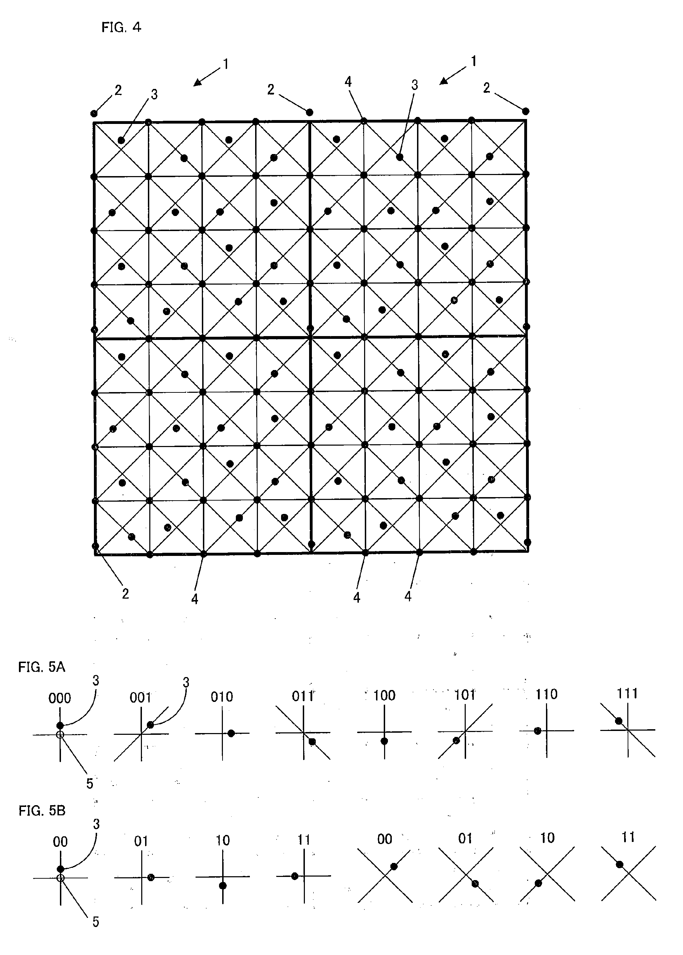

FIGS. 4 to 14B illustrate a dot pattern 1.

### <Description of Dot Pattern: GRID 1>

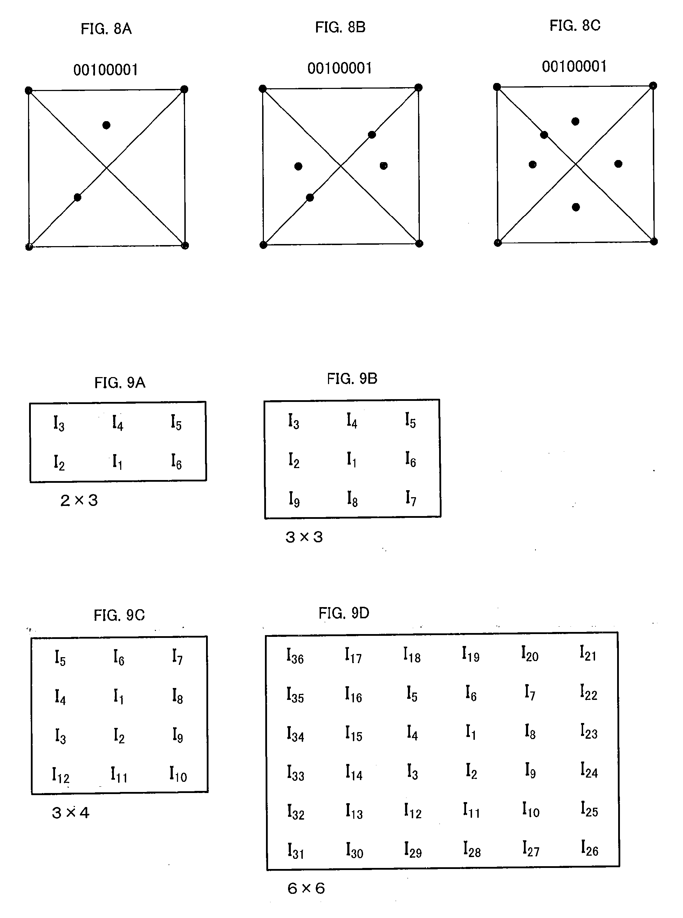

Based on FIGS. 4 to 9D, a dot pattern named GRID1 as an example of a dot pattern 1 used in this embodiment will be described. It should be noted that, in these diagrams, grid lines in horizontal and vertical directions are added for convenience of description, and do not exist in an actual printing surface.

FIG. 4 shows components that configure a dot pattern 1 and the positional relationship therebetween. The dot pattern 1 comprises key dots 2, information dots 3, and reference grid point dots 4.

To generate a dot pattern 1, based on a dot code generation algorithm, fine dots used for recognition of numerical information, that is, key dots 2, information dots 3, and reference grid point dots 4, are arranged in accordance with a predetermined rule.

As shown in FIG. 4, in a block of a dot pattern 1 that represents information, 5x 5 reference grid point dots 4 are arranged with reference to a key dot 2, and an information dot 3 is arranged around a virtual grid point 5 that is at the center surrounded by the four reference grid point dots 4. Arbitrary numerical information is defined in this block. The illustrative example of FIG. 4 shows a state where four blocks of dot pattern 1 are arranged in parallel (in bold frame), provided, however, that the dot pattern 1 is not limited to four blocks.

The key dots 2 are dots, as shown in FIG. 4, arranged by shifting four reference grid point dots 4 that are located at the four corners of a block, in a certain direction. The key dot 2 is a representative point of a block of a dot pattern 1 that includes an information dot 3. For example, the key dots are dots obtained by shifting reference grid point dots 4 that are located at the four corners of a block of a dot pattern 1 by 0.1 mm upward. However these numbers are not limited to these, and may vary depending on the size of a block of a dot pattern 1.

In consideration of false recognition with reference grid point dots 4 and information dots 3, displacement of a key dot 2 is preferably around 20% of the grid gap.

The information dots 3 are dots used for recognition of a variety of information. The information dot 3 is arranged around a key dot 2 as a representative point, as well as at the end point of a vector expressed with a start point being a virtual grid point 5 that is at the center surrounded by four reference grid point dots 4.

The gap between an information dot 3 and a virtual grid point 5 that is surrounded by four reference grid point dots 4 is preferably a gap approximately 15 to 30% of a distance between adjacent virtual grid points 5. If the distance between an information dot 3 and a virtual grid point 5 is shorter than this gap, the dots are easily recognized as a large cluster, degrading the visual quality as a dot pattern 1. On the other hand, if the distance between an information dot 3 and a virtual grid point 5 is longer than this gap, the judgment as to which one of the adjacent virtual grid points 5 is the start point of the vector of the information dot 3 becomes difficult.

When a sensor unit is used to retrieve this dot pattern 1 as image data, reference grid point dots 4 can calibrate a distortion of a lens of the sensor unit, skewed imaging, expansion and contraction of a paper surface, curved medium surface and distortion during printing. Specifically, a function for calibration (Xn, Yn) = f(Xn', Yn') is calculated for converting distorted four reference grid points 4 into the original square, then the vector of the correct information dot 3 is calculated by calibrating an information dot 3 using the same function.

If reference grid point dots 4 are arranged in the dot pattern 1, since image data of the dot pattern 1 retrieved by the sensor unit 9 can be calibrated its distortion attributable to the sensor unit, the arrangement of dots can be accurately recognized even when the image data of the dot pattern 1 is retrieved by a popular sensor unit with a lens of high distortion rate. Moreover, even when the dot pattern 1 is read out by inclining an sensor unit with reference to a surface of the dot pattern 1, the dot pattern 1 can be accurately recognized.

When a sensor unit reads dots by irradiating infrared light, key dots 2, information dots 3, reference grid point dots 4 are preferably printed with an invisible ink or a carbon ink that absorbs the infrared light.

When printing relatively fine dot pattern 1 with a general ink-jet printer or the like, the minimum gap between the reference grid point dots 4 (that is, a grid size) may be approximately 0.5 mm. In a case of off-set printing, the minimum gap may be approximately 0.3 mm.

When forming an ultra fine dot pattern 1 using an exposure technique in a semiconductor production process and the like, the gap between the reference grid points dots 4 may be some micrometers, or, using a nanometer based design rule, the dot pattern 1 of even finer dot gap can be formed.

It should be noted that the gap between the reference point dots 4 may be any value depending on the use purpose of the dot pattern 1 as long as the gap is the above-described minimum value or more.

Also, the diameter of the key dot 2, information dot 3, and reference grid point dot 4 is preferably approximately 10% of the gap between the reference grid point dots 4.

FIGS. 5A and 5B show an example of an information defining method based on a method of arranging an information dot 3. FIGS. 5A and 5B are enlarged views showing an example of a position of information dot 3 and bit expression of information defined by the position.

FIG. 5A shows an example of a defining method of expressing 3-bit information, in which an information dot 3 is shifted a distance from a virtual grid point 5 so that the information dot 3 has a direction and length defined by a vector (for example, 0.1 mm), and arranged in eight directions by being shifted by 45 degrees in clockwise direction. In this example, as the dot pattern 1 includes 16 information dots 3 in one block, 3 bits x 16 = 48 bit information can be expressed.

FIG. 5B shows an example of a method for defining an information dot 3 in a dot pattern 1 that has 2-bit information for each grid. In this example, two-bit information is defined for each information dot 3 by shifting the information dot 3 from a virtual grid point 5 in a plus (+) direction and a diagonal (x) direction. In this defining method, unlike in the case of the defining method shown in FIG. 5A (48-bit information can be indeed defined), 32-bit data (2 bits x 16 grids) can be allocated by dividing one block into grids in which an information dot 3 is shifted in a plus (+) direction and grids in which an information dot 3 is shifted in a diagonal (x) direction for intended purposes.

It should be noted that, as a combination of shifting directions of information dots 3 that are arranged in 16 grids included in one block, maximum of 2¹⁶ (65,000 approx.) dot pattern formats can be realized depending on combinations of plus (+) directions and diagonal (x) directions.

It will be appreciated that the dot pattern formats are not limited to these, and may vary including a possibility of 4-bit expression by arranging the dots in 16 directions.

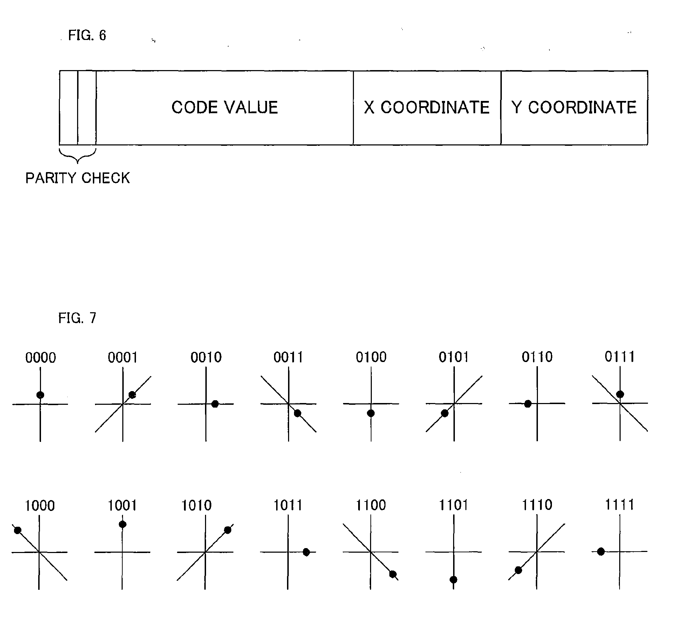

As shown in FIG. 4, one unit of dot pattern is a dot pattern configured by 4 x 4 block areas, and 2-bit information dot 3 is arranged in each block. The dot code format of this information dot 3 is shown in FIG. 6.

As shown in FIG. 6, one unit of dot pattern stores a parity check, a code value, an X coordinate, and a Y coordinate.

FIG. 7 shows an example of a method for defining information using another arrangement method of an information dot 3. In this defining method, when arranging information dots 3, two types of information dots 3, long and short distances of shifting amounts from a virtual grid point 5 surrounded by reference grid point dots 4 are used, and vector directions are eight directions, whereby 16 pattern arrangements can be defined and 4-bit information can be expressed.

In this defining method, the shifting amount of the long distance is preferably about 25-30% of the distance between adjacent virtual grid points 5. The shifting amount of the short distance is preferably about 15-20% of the distance between adjacent virtual grid points 5. However, a distance between the centers of long and short information dots 3 is preferably longer than the diameter of the information dots 3, so that these information dots 3 can be distinguishably recognized even when the directions in which the long and short distance information dots 3 are shifted are the same.

It should be noted that the method for defining 4-bit information is not limited to the above defining method, and can vary in many ways including expressing 4 bits by arranging information dot 3 in 16 directions.

FIGS. 8A to 8C show an example of a method for defining information by a method of arranging a plurality of information dots 3 per one grid. FIG. 8A is an example of arranging two information dots 3, FIG. 8B is an example of arranging four information dots 3, and FIG. 8C is an example of arranging five information dots 3.

The number of information dots 3 surrounded by four reference grid point dots 4 in one grid is preferably one, taking into account the visual quality. However, if the visual quality is disregarded and information amount should be increased, one bit may be allocated to one vector and a plurality of dots are used to express as information dots 3, thereby defining voluminous information. For example, in eight direction concentric vectors, one grid can express 2⁸ pieces of information, and one block that includes 16 grids can express 2¹²⁸ pieces of information.

The dot pattern 1 is recognized by retrieving the dot pattern 1 as image data by a sensor unit and, first, extracting reference grid point dots 4, then, extracting a key dot 2 based on the fact that there is no dot at a position where a reference grid point 4 is supposed to be, then, extracting an information dot 3.

FIGS. 9A to 9D show other arrangement examples of grids that include information dots 3. FIG. 9A is an example in which six grids (2 x 3) are arranged in one block. FIG. 9B is an example in which nine grids (3 x 3) are arranged in one block. FIG. 9C is an example in which 12 grids (3 x 4) are arranged in one block. FIG. 9D is an example in which 36 grids are arranged in one block. In this way, the number of grids included in one block is not limited to sixteen in the dot pattern 1 and can vary in many ways.

That is, the information amount that can be stored in one dot pattern 1 can be flexibly adjusted by adjusting the number of grids included in one block and the number of information dots 3 included in one grid according to the size of the required information amount or the resolution of the sensor unit.

### <Description of Dot Pattern; GRID5>

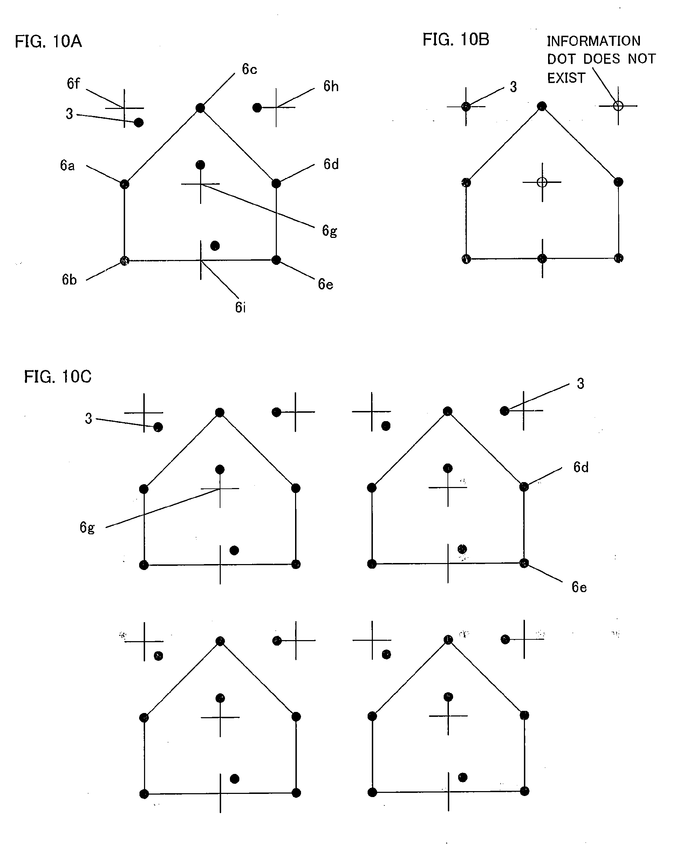

FIGS. 10A to 10C show another example of the dot pattern (GRID5).

FIG. 10A shows a positional relationship among reference point dots 6a to 6e, virtual reference points 6f to 6i, and information dots 3 in a dot pattern.

This dot pattern defines the direction of the dot pattern by the shape of the block. In GRID5, reference point dots 6a to 6e are first arranged. The line connecting the reference point dots 6a to 6e defines the shape that shows the orientation of the block (in this case, a pentagon pointing upward). Then, virtual reference points 6f to 6i are defined based on the arrangement of the reference point dots 6a to 6e. Next, vectors which have direction and length with the virtual reference points 6f to 6i as the starting points are defined. Finally, information dots 3 are arranged at the end points of the vectors.

In this way, in GRID5, the orientation of the block can be defined by the way reference point dots 6a to 6e are arranged. Further, by defining the orientation of the block, the size of the whole block is also defined.

FIG. 10B shows an example of defining information by whether or not an information dot 3 exists on virtual reference points 6f to 6i in a block.

FIG. 10C shows an example in which each two blocks of GRID5 are concatenated respectively in horizontal and vertical directions. However, the directions in which the blocks are concatenated and arranged are not limited to horizontal and vertical directions and the blocks may be concatenated in any directions.

It should be noted that, while, in FIGS. 10A to 10C, reference point dots 6a to 6e and information dots 3 are shown as the same shapes, the reference point dots 6a to 6e and information dots 3 may be different shapes. For example, the reference point dots 6a to 6e may be larger than the information dots 3. Also, the reference point dots 6a to 6e and the information dots 3 may be any shape as long as they are distinguishable, including a circle, triangle, square, and a polygon of larger number of angles.

### <Description of Dot pattern; Stream dot>

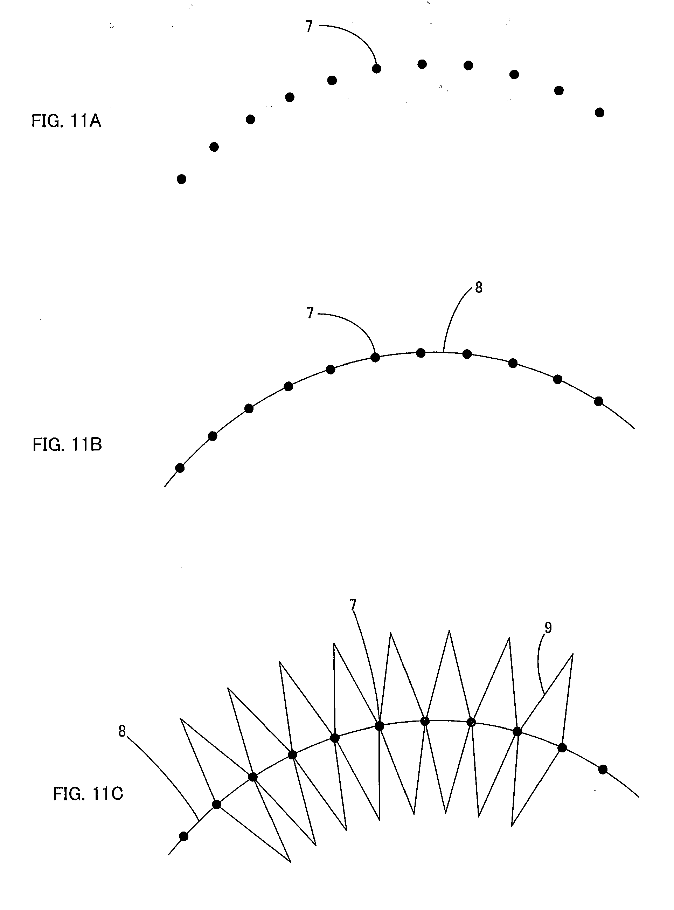

Next, with reference to FIGS. 11A to 13, the following describes an example of a method of forming a dot pattern used in the invention.

FIGS. 11A to 12B show an example of processes of forming a stream dot pattern.

The dot pattern of the invention differs from conventional dot patterns. As step 1, a plurality of reference dots 7 are sequentially arranged in a line at positions where information is desired to be input and output corresponding to visible information on the medium surface,

While the reference dots 7 are arranged in a curved line in FIG. 11A, the arrangement of reference dots 7 is not limited to this, and may be changed in many ways for forming the dot pattern tailored to a shape fitted to the area where information is input and output, including a mixture of straight lines and curved lines, and a polygonal line comprising a plurality of line segments.

Also, the reference dots 7 may be arranged on actual lines that are visibly formed on a medium surface, or the reference dots 7 may be arranged in accordance with a predetermined rule along the actual lines. The actual line, here, is a concept in contrast to a virtual line, and includes all lines that actually exist. For example, there are solid lines, dashed lines, dotted lines, straight lines, and curved lines, and, in this invention, medium on which the lines are formed (for example, a display of a video display device) and material constituting the lines (for example, ink) may be any kinds. It should be noted that the dot pattern may be formed by printing, displaying on a display, or unevenness such as holes or trenches on metal and plastic.

It should be noted that, while the reference dots are preferably arranged at equal intervals from a viewpoint of reading accuracy improvement, the arrangement is not limited to this, and a set of dot patterns of certain information may be defined by mixing a plurality of intervals, or three different intervals of reference dots can be used in a set of certain information to define both a set of certain information and the direction of the dot pattern.

Next, as step 2, a first virtual reference line 8 that connects the reference dots 7 arranged in a line is provided. While the first virtual reference line 8 is a curved line in FIG. 11B, the first virtual reference line 8 is not limited to this; a straight first virtual reference line 8 may be provide for reference dots 7 arranged in a curved line, or a curved first virtual reference line 8 may be provided for reference dots 7 arranged in a straight line. That is, depending on where to arrange the second virtual reference lines 9, virtual reference points 10, and information dots 3 in the following steps 3 to 5, the first virtual reference line 8 formed by a straight line, a polygonal line and/or a curved line that connects reference dots may be flexibly defined.

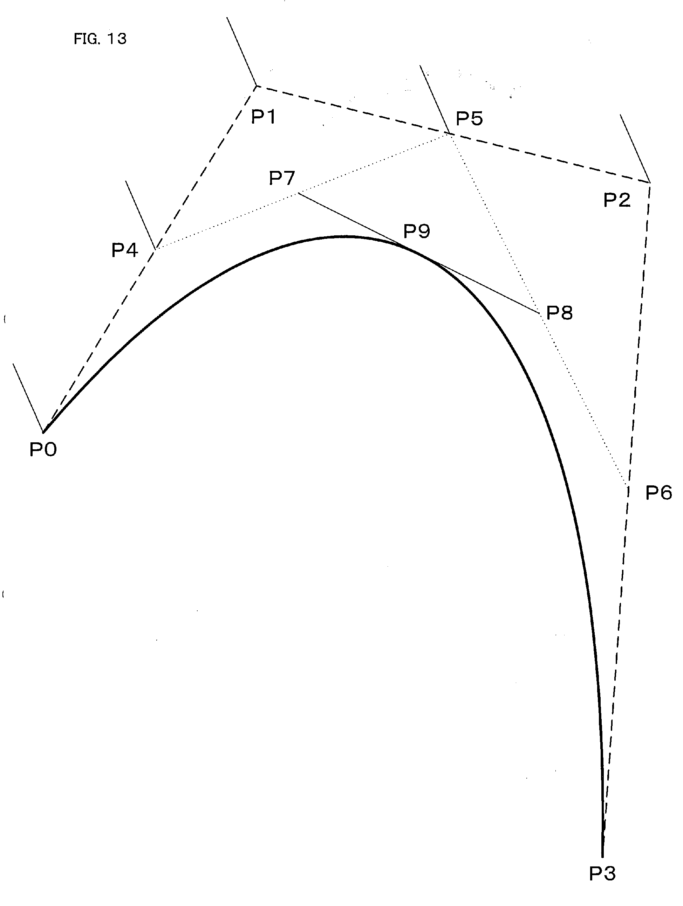

It should be noted that, as shown in FIG. 13, if the first virtual reference line 8 is a curved line, the curved line is preferably a Bezier curve.

That is, first, reference dots 7 on the first virtual reference line 8 are defined as P0 and P3, and P1 and P2 are defined as given control points. Next, points, P4, P5, and P6, that divide three line segments that are obtained by sequentially connecting the control points, P0-P1, P1-P2, and P2-P3, in a ratio of 1 to 1 are calculated. Then, points P7 and P8 that divide two line segments that are obtained by sequentially connecting above points, P4-P5 and P5-P6, in a ratio of 1 to 1 are calculated.

Finally, a point P9 that further divides a line segment P7-P8 that connects the points P7 and P8, in a ratio of 1 to 1, is calculated, and this point becomes a point on a Bezier curve.

By repeatedly performing these steps, a Bezier curve with control points P0, P1, P2, and P3 can be obtained.

It should be noted that, without limiting to a Bezier curve, the first virtual reference line 8 may be provided using a variety of algorithms such as a spline curve obtained by utilizing a spline function, an nth-order polynomial, an elliptic arc and the like.

Also, for the second virtual reference line 9, a curved line can be defined using the same method as the first virtual reference line 8.

Next, as step 3, a second virtual reference line 9, that is defined at a predetermined position from the reference dots 7 arranged in a line and/or the first virtual reference line 8, is provided. In FIG. 11C, the second virtual reference line 9 is provided with arbitrary angle from neighboring reference dots 7 toward a predetermined point on a vertical line to a tangent line of the first virtual reference line 8 at a middle point between the neighboring reference dots 7. However, the second virtual reference line 9 is not limited to this and may be defined by a variety of ways to provide virtual reference points tailored to an area where information is desirably input and output by the dot pattern as described later.

Also, the second virtual reference line 9 may be provided only on one side of the first virtual reference line 8 to define the direction of the dot pattern, or the second virtual reference lines 9 may be provided on both sides thereof to increase the information amount.

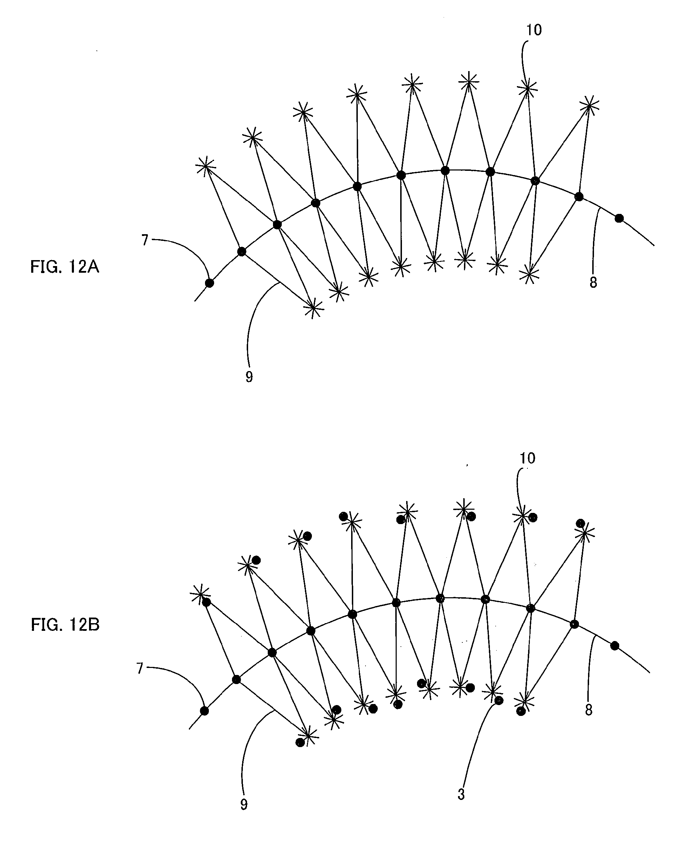

Next, as step 4, a plurality of virtual reference points 10 are provided at predetermined positions on the second virtual reference line 9. In FIG. 12A, a virtual reference point 10 is provided at an intersection of the second virtual reference lines 9, that is, at a vertex of an isosceles triangle with a straight line that connects neighboring reference dots 7 as a base and the second virtual reference lines 9 as opposing sides. However, the position of the virtual reference point 10 is not limited to this, and may vary in many ways, such as, providing at a midpoint of the second virtual reference line 9 or on a reference dot 7 instead of on the second virtual reference line 9.

Then, as step 5, an information dot 3 is arranged at the end point of a vector expressed with a virtual reference point 10 as the start point. In FIG. 12B, vector directions from a virtual reference point 10 are eight directions and an information dot 3 is arranged for one virtual reference point 10 to make a distance from the virtual reference point 10 an equal distance. However, the arrangement of the information dot 3 is not limited to this, and a plurality of information dots 3 can be arranged in arbitrary direction and arbitrary length, such as arranging an information dot 3 on a virtual reference point 10, arranging with 16 vector directions, or, arranging two information dots 3 for one virtual reference point 10.

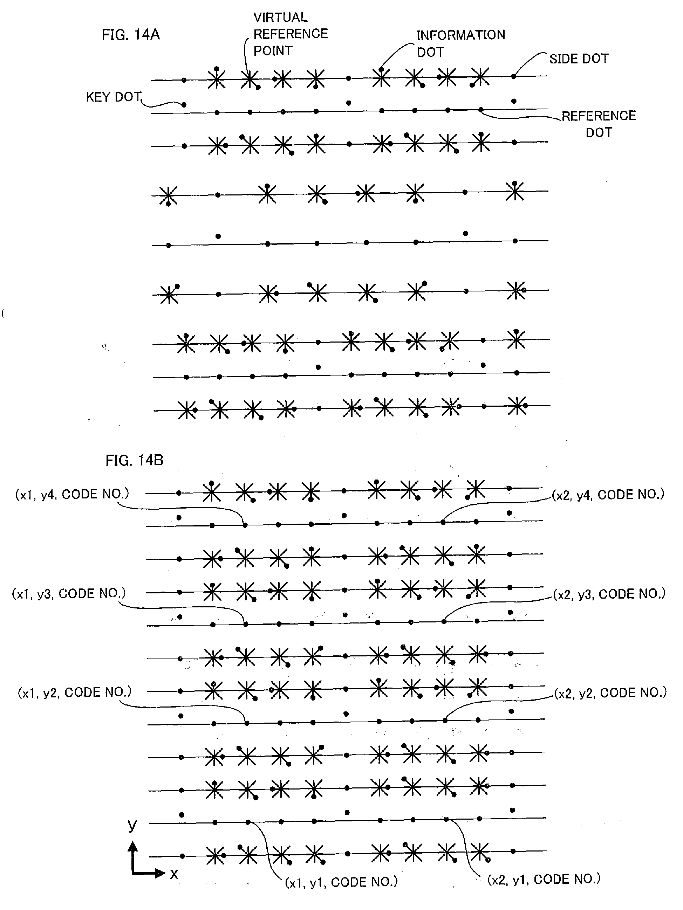

FIGS. 14A and 14B are diagrams showing an example of a state in which stream dot patterns are arranged in an up to down direction.

In FIGS. 14A and 14B, key dots and side dots are arranged in addition to the reference dots and information dots. The key dots are dots arranged at both sides of a set of certain information. This key dots are representative points of one area of the dot pattern 1 that expresses a set of information dots. The side dots are dots arranged on a positive and negative extended line of displacement of the key dot 2.

In FIG. 14B, reference dots and stream dot patterns are arranged at equal intervals. In this way, by arranging and forming a plurality of stream dot patterns with reference points of certain intervals, X and Y coordinate values can be tightly defined in the writing area so as to generate trail information, enabling handwriting input. However, the stream dot pattern of the invention is not limited to this, and, as shown in FIG. 14A, intervals of the dot patterns may be set arbitrarily. Also, the intervals of reference dots can also be set arbitrarily.

In this way, without being restricted to the shape of a rectangular area where dot patterns that define X and Y coordinates are formed as two-dimensional codes (used as an index), it is possible to form dot patterns in which a set of certain information is repeated in a flexible shape that is tailored to the information area visibly formed on a medium surface.

It should be noted that the virtual reference lines and virtual reference points of the invention are not actually formed on the medium surface by printing, and rather virtually set on an image memory of a computer when arranging dot patterns or reading dot patterns.

Using this stream dot pattern, the dot patterns can also be formed on curved surfaces including globes, and three-dimensional figures including human phantoms and three-dimensional maps, whereby the input and output device of the invention can be utilized without being limited to planar maps, picture books, or the like.

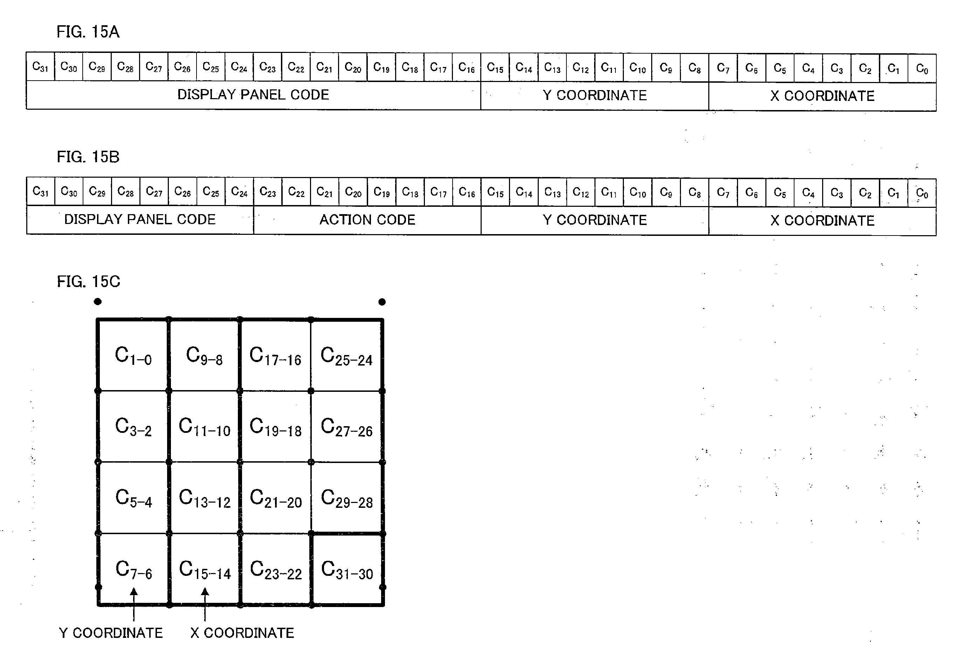

FIGS. 15A to 15C are diagrams illustrating dot pattern formats formed on a display panel in the handwriting input board of the invention.

It should be noted that, while FIGS. 15A to 15C illustrate a case in which the above-described dot pattern of GRID1 is used, the above-described direction dots, stream dots, and other dot patterns may also be used in this invention.

As shown in FIG. 15C, the dot pattern is a dot pattern comprising 4 x 4 block areas, and the blocks are partitioned into C_{1·0}-C_{31·30}. Dot code formats of respective areas are shown in FIGS. 15A and 15B.

FIG. 15A is a. format that registers a display panel code, X coordinate, and Y coordinate. The display panel code refers to an ID, etc. added to the display panel, and the X coordinate and Y coordinate respectively refer to a position (coordinate values) on a medium. As such, if a user draws on or touch the display panel using the scanner pen, the used display panel and the coordinate position of the read part are simultaneously recognized only by one reading operation.

FIG. 15B is a format that registers the display panel code, action code, X coordinate, and Y coordinate. The action code refers to an operation instruction. For example, the action code refers to operation such as "Zoom in," "Zoom out," and the like, and are generally included in dot patterns used for areas other than the writing area.

In this way, the dot pattern of the invention can register a variety of code information and X and Y coordinates, such as a display panel code and an action code, in one format. In addition, the dot pattern can register only X and Y coordinates or code information, realizing flexible formats.

As a method of providing such a dot pattern on a display panel, there are a method of using an information input assistance sheet, a method of directly printing on the panel, or a method of magnetically or electrically embedding the dot pattern inside the display panel.

### <Information Input Assistance Sheet>

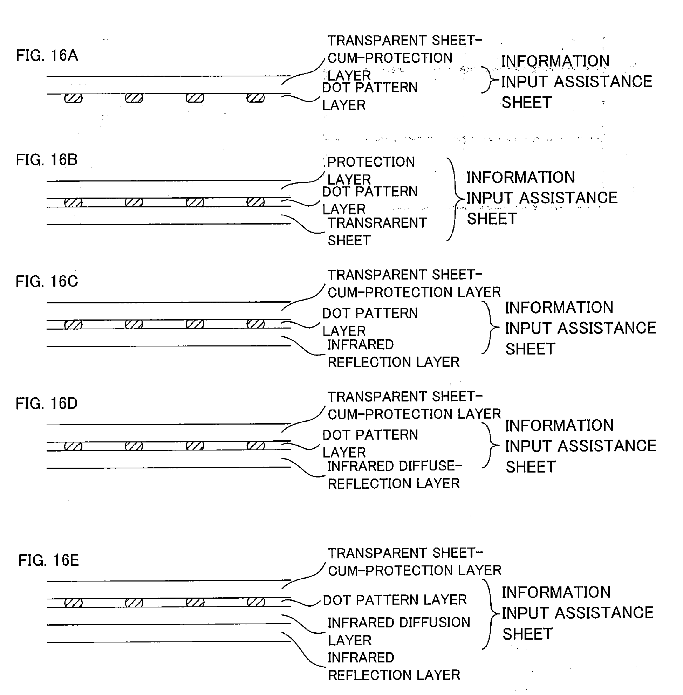

FIGS. 16A to 16E illustrate an information input assistance sheet as one of these methods.

The information input assistance sheet is formed with a transparent film and printed with dot patterns.

FIG. 16A is an information input assistance sheet comprising, from the display panel side, a dot pattern layer, and a transparent sheet-cum-protection layer.

The dot pattern layer is printed with dot patterns in which dots made of material that has a characteristic of absorbing infrared light, such as carbon ink, are arranged in accordance with a predetermined rule such as the one described above.

The transparent sheet-cum-protection layer is made of material that transmits visible light and infrared light, such as vinyl, polyvinyl chloride, polyethylene terephthalate, and polypropylene. If the dot pattern is repeatedly touched by the scanner, the dots wear, causing a problem in which the dot pattern cannot be accurately read. Thus, by providing the transparent sheet-cum-protection layer, wear and stain of the dots can be prevented and the sheet can be used for longer period.

FIG. 16B is an information input assistance sheet comprising a transparent sheet, a dot pattern layer, and a protection layer.

The transparent sheet and the protection layer are made of material that transmits visible light and infrared light, such as vinyl, polyvinyl chloride, polyethylene terephthalate, and polypropylene. Generally, easily printable material is used for the transparent sheet and highly heat and scratch resistant material is used for the protection layer.

FIG. 16C is an information input assistance sheet comprising an infrared reflection layer, a dot pattern layer, and a transparent sheet-cum-protection layer.

The infrared reflection layer is made of a transparent sheet for evaporation made of material that transmits visible light, such as vinyl, polyvinyl chloride, polyethylene terephthalate, and polypropylene, evaporated with infrared reflection material. The infrared reflection layer reflects infrared light, that is irradiated from the infrared irradiation unit of the scanner and transmitted through the transparent sheet-cum-protection layer, back to the scanner and transmits visible light. In this way, only the infrared light irradiated from the infrared irradiation unit can be used as the irradiation light, enabling imaging of only bright and clear dot patterns and accurately analyzing the dot codes.

FIG. 16D is an information input assistance sheet comprising an infrared diffuse-reflection layer, a dot pattern layer, and a transparent sheet-cum-protection layer.

The reflection light specularly reflected off the infrared reflection layer does not enter into the lens, and, thus, the center of the imaging area is imaged in black. For this reason, the entire dot patterns cannot be imaged. Therefore, an infrared diffuse-reflection layer is provided instead of the infrared reflection layer of FIG. 16C. In this way, the infrared light irradiated from the infrared irradiation unit is diffusely reflected off the infrared diffuse-reflection layer, and reflection light of wide imaging area enters into the lens.

FIG. 16E is an information input assistance sheet comprising an infrared reflection layer, an infrared diffusion layer, a dot pattern layer, and a transparent sheet-cum-protection layer.

The infrared diffusion layer is formed with transparent or translucent material. The infrared light irradiated from the infrared irradiation unit is specularly reflected off the infrared reflection layer, and diffused by the infrared diffusion layer. In this way, all reflection light of the imaging area is more surely enter into the lens than the cases of using only an infrared reflection layer and an infrared diffuse-reflection layer.

It should be noted that, while FIGS. 16B to 16E are illustrated as if there is air gap around the dots of the dot pattern layer, the pattern layer where the dots are arranged is ultra thin, and upper and lower layers are actually adhered at the portion where no dot is arranged, without air gap.

### <Magnetophoresis Display Panel>

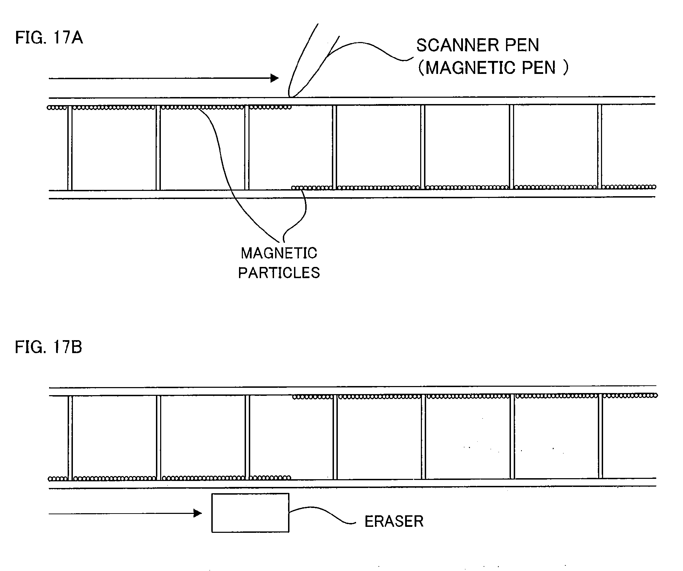

FIGS. 17A and 17B are diagrams illustrating a magnetophoresis display panel that is used in the display panel of the invention.

The magnetophoresis display panel has two opposing non-magnetic panels which are respectively positioned at a visual side and a non-visual side. A lot of partitions are provided between these panels, and a lot of honeycomb structure cells are formed by these partitions and panels.

Inside these cells is enclosed dispersed fluid comprising magnetic particles, dispersed medium, colorant that configures the background part, and thickener as necessary. As shown in FIG. 17A, when the magnetic pen is used to draw on the front surface of the visual side of the panel, the magnetic particles are absorbed and migrate until they reach the reverse surface of the visual side panel, then, the text and the like drawn by the magnetic pen is displayed on the surface of the panel by differences in colors of the colorant that configures the background and the magnetic particles. Generally, as the ground color of the magnetic particles is black or dark brown color, white colorant is used to configure the background to make black-and-white display.

FIG. 17B is a diagram illustrating a case in which texts and the like that have once displayed is erased. To erase the texts and the like that have once displayed, the eraser installed on the back side of the panel of the non-visual side is slid along the surface of the non-visual side panel. Then, the magnetic particles drawn to the reverse side of the visual side panel migrate to the non-visual side panel, and, when seen from the side of the visual side panel, only the color of the dispersed fluid is seen and the display of the text and the like appear to be erased. It should be noted that the visual side panel uses, for example, an opaque white light diffuser plate so that the color of the magnetic particles are not seen through from the visual side when nothing is displayed.

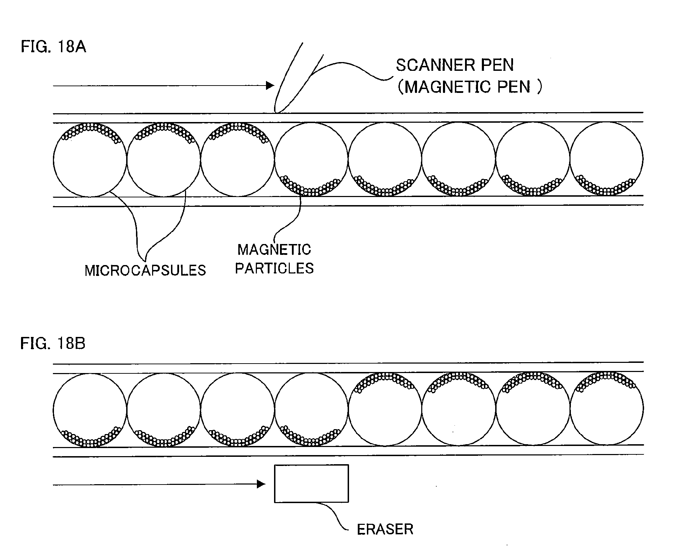

FIGS. 18A and 18B are diagrams illustrating a case in which a microcapsule magnetophoresis display sheet is used.

As shown in FIG. 18A, in this embodiment, many spherical microcapsules are housed between the visual side panel and the non-visual side panel, and many cells are formed by these microcapsules.

These microcapsules are configured by dispersed fluid comprising magnetic particles, dispersed medium, colorant that configures the background part, and thickener as necessary, and shell material such as polymers that encapsulates this dispersed fluid.

When texts and the like are written on the front surface of the visual side panel by the scanner pen, the magnetic particles are drawn along the trail and the texts and the like are displayed.

To erase the texts and the like that have once displayed, the eraser installed on the back side of the panel of the non-visual side is slid along the surface of the non-visual side panel. Then, the magnetic particles drawn to the reverse side of the microcapsules on the visual side panel migrate toward the non-visual side panel within the microcapsules until reaching the reverse side of the microcapsules on the non-visual side panel. When seen from the side of the visual side panel, only the color of the dispersed fluid is seen and the display of the text and the like appears to be erased.

It should be noted that, when using magnetic particles as in FIGS. 17A to 18B, magnetic particles colored with luminescence material may be used. For the luminescence material, silicate phosphors, silicate and aluminate phosphors, and the like may be used.

Using luminescence material, when light is irradiated using an electric torch or the like, the written texts shine, thus, the written texts, etc. can be read even in dark places.

### <Electrophoresis display panel>

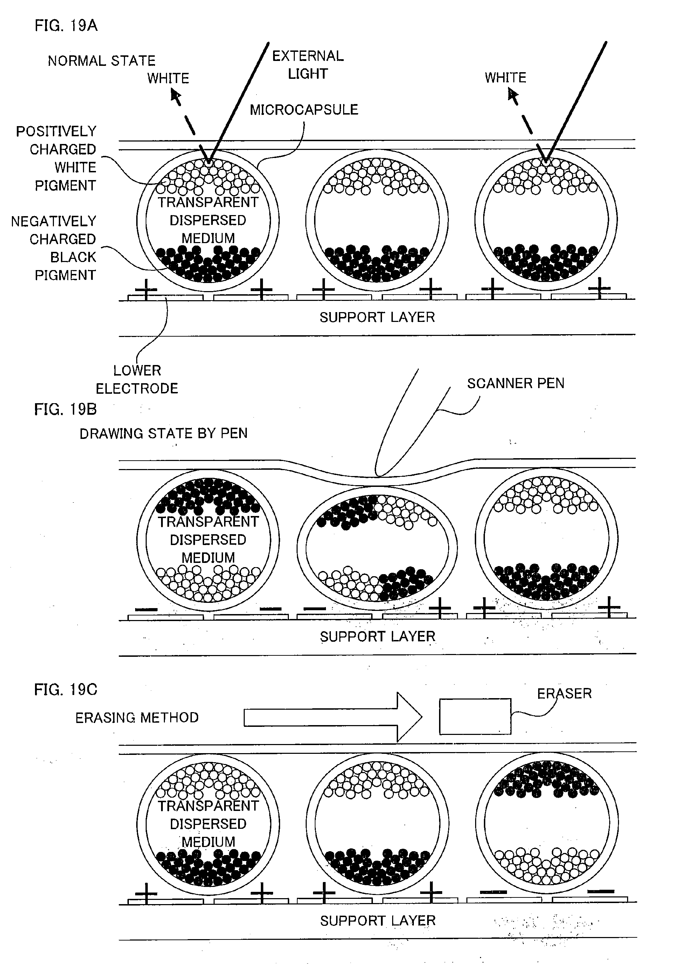

FIGS. 19A to 19C are diagrams illustrating an electrophoresis display panel that is used in the display panel of the invention.

The electrophoresis display panel generally uses a microcapsule electrophoresis sheet, which performs black-and-white display by causing white and black particles to migrate in microcapsules that house fluid using electric field, and is also referred to as a particle migration type.

FIG. 19A shows a normal state in which no writing is performed. White and black pigment particles that are positively and negatively charged are encapsulated with oil in a transparent microcapsule with a diameter of some 40µm, and only thin one layer of the capsules are tightly arranged between two narrow electrode plates. The electrode of one side that becomes the display surface is made with transparent electrode such as ITO (Indium Tin Oxide), and the electrode of the other side (lower electrode) is configured with a small rectangular electrode of a size of the required display resolution.

FIG. 19B shows a state in which the scanner pen is used to write in thereon. When a user writes in using the scanner pen, voltage is applied from an external control circuit. Then, electric field is generated between the two electrodes, and white and black pigment particles that are positively and negatively charged migrate within the oil. Then, when pigment particles of either color selected by voltage (black in FIG. 19B) gather on the display surface side of the capsule, black and white display is performed, and displaying either white and black is selected for each pixel that is made by fine electrodes. In this way, only the area that is written by the user is displayed in black.

FIG. 19C is a diagram illustrating a case in which writing that has once displayed is erased. To erase the writing that has once displayed, the user slides the eraser installed on the panel of the visual side along the surface of the visual side panel. By sliding the eraser, voltage opposite to the one when written in by the scanner pen is applied, and white pigment migrates to the front surface, whereby, the writing is erased.

It should be noted that, while FIGS. 19A to 19C illustrate a case in which a microcapsule electrophoresis display sheet is used, the invention is not limited to this case, and an electrophoresis display sheet that causes positively and negatively charged pigment particles to migrate without using microcapsules may also be used.

### <Scanner Pen that Generates Trail Information>

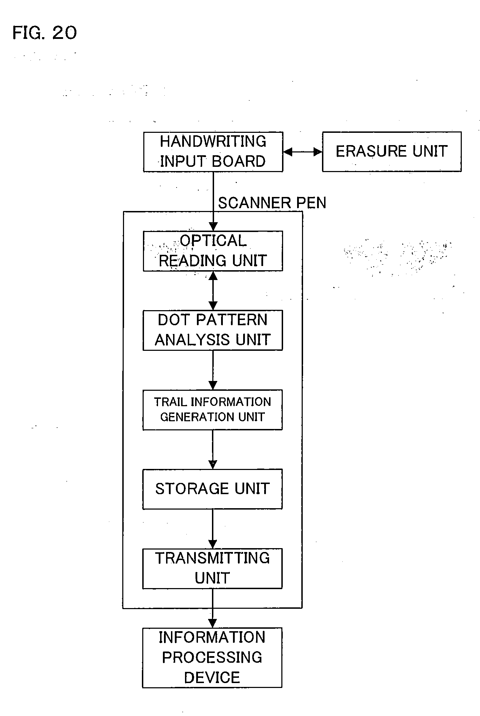

FIG. 20 is a block diagram illustrating generation of trail information using the handwriting input board of the invention.

The scanner pen has an optical reading unit, a dot pattern analysis unit, a trail information generation unit, a storage unit, and a transmitting unit.

When texts and the like are written in on the handwriting input board using the scanner pen, the optical reading unit of the scanner pen images X and Y coordinates on the drawn trail or dot patterns that define X and Y coordinates and code values. The dot pattern analysis unit analyzes the imaged dot patterns, and outputs the X and Y coordinates or the X and Y coordinates and code values. Then, based on the analyzed dot patterns, the trail information generation unit generates trail information that sequentially records X and Y coordinates or X and Y coordinates and code values. The generated trail information is stored in the storage unit, and/or transmitted to the transmitting unit. The transmitting unit transmits the trail information to the information processing device. The storage unit and transmitting unit may be provided with corresponding buttons, and operation may also be instructed by the buttons.

Also, the handwriting input board has an erasure unit, and, when the user completes writing, part or whole thereof can be erased by the eraser.

### <Speaking Pen>

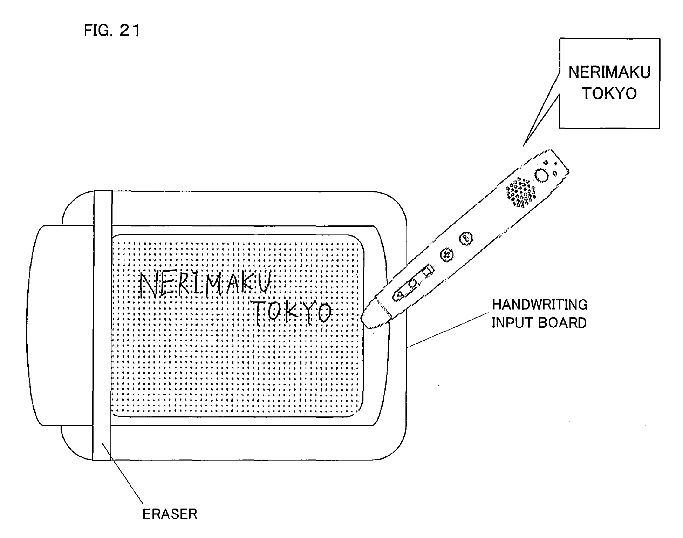

FIG. 21 is a diagram illustrating a case in which a scanner pen (a speaking pen) equipped with a sound output unit is used.

The scanner pen of the invention (the speaking pen) has a sound output unit in addition to the configuration, such as the optical reading unit, that is described above. As shown in FIG. 21, when a user writes in "Nerimaku Tokyo" on the display panel, the dot patterns are imaged by the optical reading unit, and, based on the X and Y coordinates output by the dot pattern analysis unit or the X and Y coordinates, trail information is generated by the trail information generation unit. Then, the trail information analysis unit recognizes the text, and a sound corresponding to the written content "Nerimaku Tokyo" is output from the speaking pen.

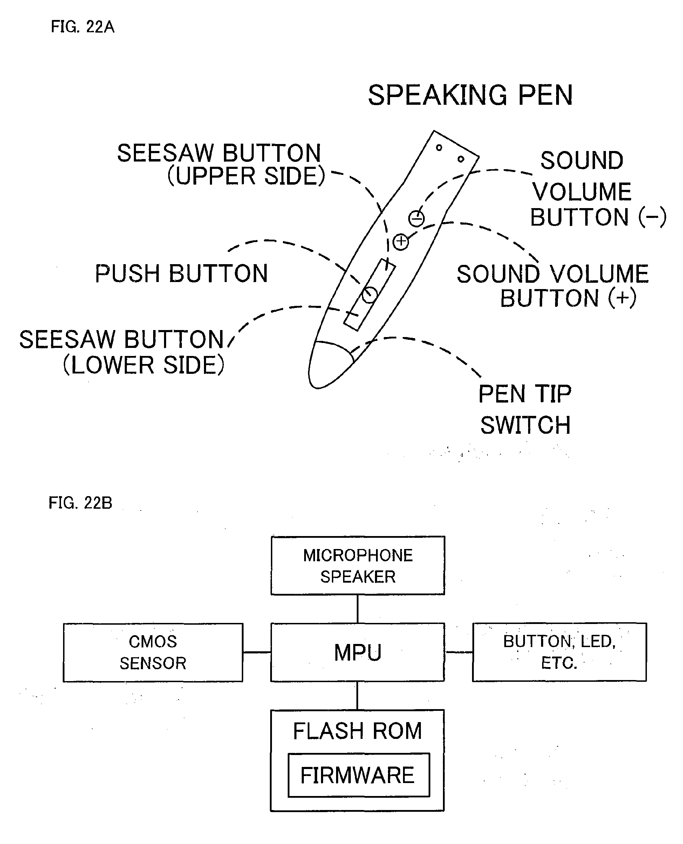

FIGS. 22A and 22B are diagrams illustrating the speaking pen. FIG. 22A shows a schematic view of the speaking pen, and FIG. 22B shows a block diagram of a configuration of the speaking pen.

The speaking pen as shown in FIGS. 22A and 22B comprises: a sound volume adjusting button (-), a sound volume adjusting button (+), a seesaw button (upper side), a seesaw button (lower side), a push button, a pen tip switch, a microphone, a speaker, an LED, a CMOS sensor, a flash ROM, a firmware, and an MPU.

The speaking pen can reproduce and record sounds and the like, the main functions of which are reproducing, recording, and linking sounds. When the speaking pen reads a dot pattern, the reproducing function reproduces sounds by the internal speaker. The recording function stores the sounds recorded by the internal microphone, and links the sounds to the code values that are defined by dot patterns. A user can reproduce the sounds recorded by the reproducing function by reading the linked dot patterns.

Also, by adding a pen tip switch on the pen tip, the dot patterns are analyzed only when the printed material and the like is read, saving electrical power consumption.

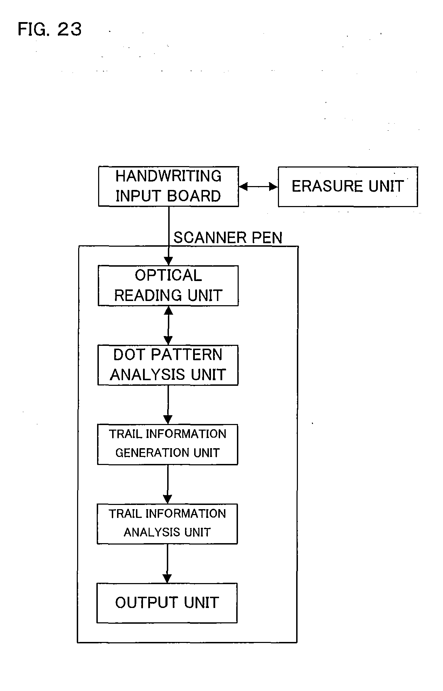

FIG. 23 is a diagram illustrating analysis of trail information by the speaking pen.

When texts and the like is written in on the handwriting input board with the scanner pen, the optical reading unit of the scanner pen images the dot patterns on the written trail. The dot pattern analysis unit analyzes the imaged dot patterns. Then, based on the analyzed dot patterns, the trail information generation unit generates train information. The trail information analysis unit analyzes the generated trail information. The output unit outputs a sound corresponding to the analysis result.

Also, the handwriting input board has an erasure unit, and so, the user can erase part or all of the writing when the writing is complete.

It should be noted that, while the scanner pen of this embodiment is a speaking pen and outputs only sounds, the invention is not limited to this, and the scanner pen may be provided with a liquid crystal screen and the like to display images. Also, the scanner pen may output both sounds and images.

### <Erasure Unit on Scanner Pen>

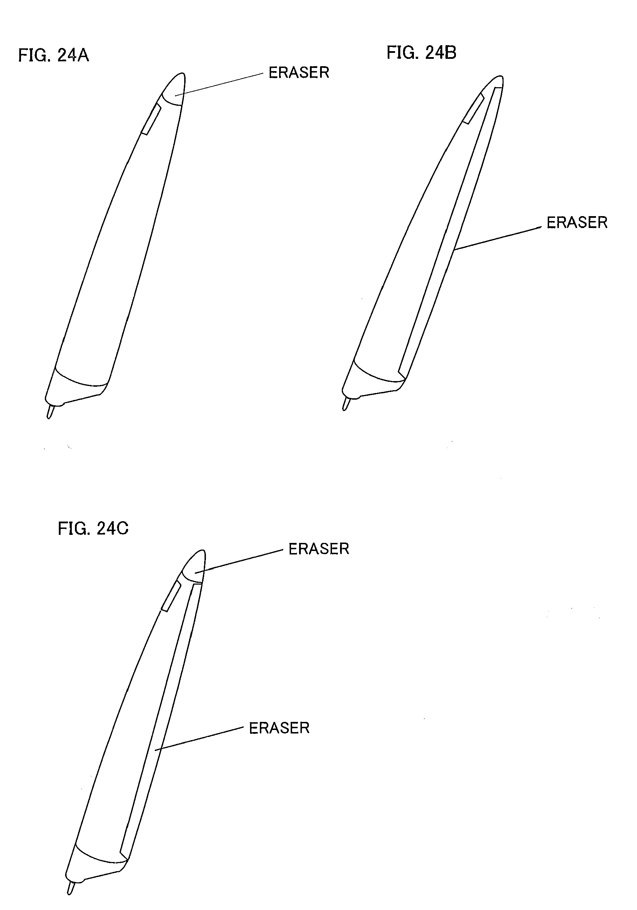

FIGS. 24A to 24C are diagrams illustrating a case in which an erasure unit is provided on the scanner pen.

In the above example, an erasure unit (an eraser) is provided on the handwriting input board. However, as shown in FIGS. 24A to 24C, an eraser may be provided on the scanner pen side in this invention.

FIG. 24A is a diagram in which an eraser is provided on the opposite side of the optical reading unit. In such a case, the eraser is turned upward at a position corresponding to the writing that is desired to be erased on the reverse side of the handwriting input board to erase the written content. This is particularly appropriate when erasing part of the written content. FIG. 24B is a diagram in which an eraser is provided on the middle of the scanner pen. In such a case, the scanner pen is held sideways and slid on the reverse side of the display panel to erase the written content. This is appropriate when erasing all the written content at once. FIG. 24C is a diagram in which erasers are provided on the opposite side of the optical reading unit and on the middle thereof. By providing both erasers, the erasers can be selectively used depending on the cases in which part of the written content is desired to be erased and all the written content is desired to be erased, enhancing convenience for users.

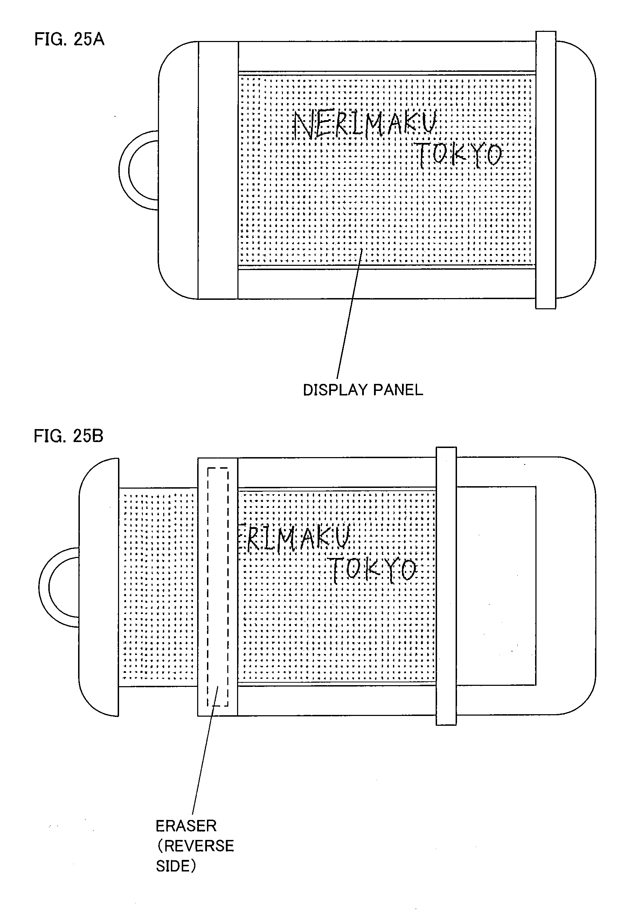

FIGS. 25A and 25B are diagrams illustrating another embodiment of the handwriting input board.

FIGS. 25A and 25B illustrate a handwriting input board provided with an eraser on the reverse side of the frame of the main body of the handwriting input board. FIG. 25A illustrates a state in which writing is complete, and FIG. 25B illustrates a state in which the writing is being erased.

A display panel is slidably provided on the handwriting input board of the embodiment. The display panel has frames on the left and right, and the frame of the left side is provided with a handle. When a user erases the content written on the display panel, the user holds the handle and slides the display panel to the left side. Then, the eraser provided by being fixed on the reverse side of the main body of the handwriting input board, erases the written content.

### <Handwriting Input Board that Generates Sounds>

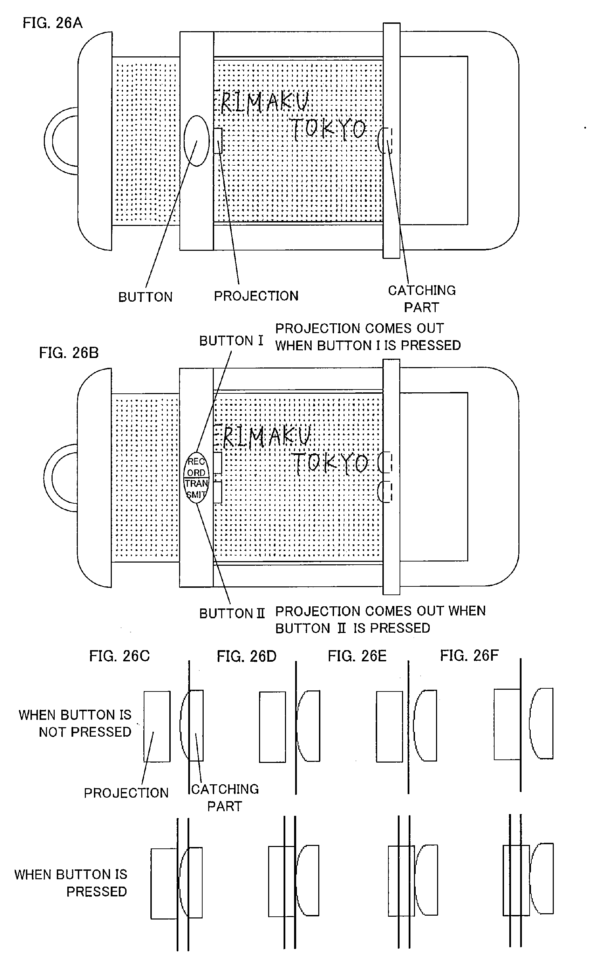

FIGS. 26A to 29B are diagrams illustrating a handwriting input board that generates sounds and transmits trail information to an information processing device.

FIGS. 26A to 26F are diagrams illustrating cases in which a button is used to generate sounds.

The handwriting input board of the embodiment is the one on which an eraser is provided by being fixed thereto as shown in FIGS. 25A and 25B. As shown in FIG. 26A, a button for generating sounds is provided on the left frame of the main body. When a user presses the button, a projection comes out from the middle of the right end of the left frame thereof. On the other hand, a catching part for the projection is provided on the right frame of the display panel. When the user slides the display panel and completes sliding, the projection is engaged with the catching part. A collision sound is generated at this time.

When a collision sound is generated, the sound recognition unit embedded in the scanner pen which is not drawn recognizes the collision sound. Then, the transmitting unit transmits the trail information to the information processing device.

When a user presses a button in a state in which the projection is out, the projection is withdrawn inside the left frame thereof.

FIG. 26B is a diagram illustrating a case in which a record button and a transmitting button are provided. In this embodiment, a button 1 named "Record," and a button 2 named "Transmit" are provided. Projections corresponding to respective buttons are provided inside the left frame, and, when each button is pressed, the corresponding projection comes out. When a user slides the display panel and completes sliding, the projection collides with the catching part, generating a collision sound. Collision sounds of different frequencies are respectively generated between when the projection of button 1 is collided and when the projection of button 2 is collided. The sound recognition unit embedded in the scanner pen which is not shown in the drawings recognizes each sound, and, when the sound recognition unit recognizes a collision sound corresponding to button 1, the storage unit of the scanner pen stores the trail information, while, when a collision sound corresponding to button 2 is recognized, the transmitting unit transmits the trail information to the information processing device.

FIG. 26C is an enlarged view indicating a relationship between the projection and the catching part of FIG. 26A when the button is pressed and not pressed. When the button is not pressed, the projection is housed inside the left frame of the handwriting input board main body. If a user slides the display panel in this state, the left frame of the main body collides with the right frame of the display panel. Here, a projection is provided at a position so that the projection housed in the frame and the catching part do not generate a collision sound by colliding each other. In this way, it is possible not to generate a collision sound when a user does not press a button.

It should be noted that, in this embodiment, as shown in any of the configurations of FIGS. 26D, 26E, 26F, it is possible to realize configurations in which a projection and a catching part do not generate a collision sound when a user does not press the button and completes sliding.

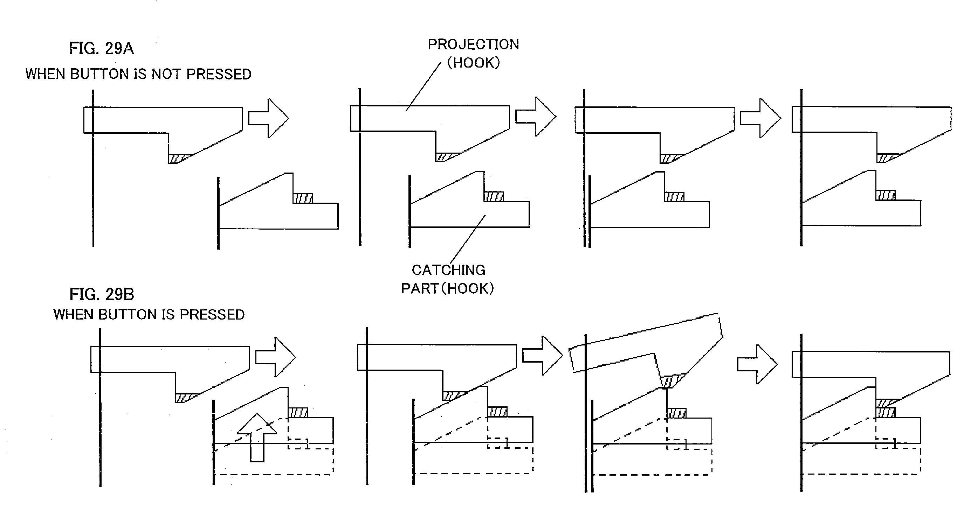

In this way, by providing a button, it is possible to easily perform selective processing, by causing to generate a collision sound when the trail information is desired to be stored in the scanner pen or transmitted to the information processing device, or not causing to generate a collision sound when the trail information is desired to be erased without transmitting. The above projection may be a shape in which the projection engages as a hook as shown in FIGS. 29A and 29B. When a button of FIG. 29A is not pressed, the hooks do not engage, while, in FIG. 29B, the hook projections come to positions where they engage each other, and, when the button is pressed, the hooks contact each other, slide, bend up, and engage, then, make a click sound as a reaction, and the sound is recognized. Further, when the finger is released from the button (or presses the button again), the hook projections are released, enabling the projections to slide. This generated sound is emitted as a distinguishable characteristic sound, a member such as metal may be provided to the shadow areas of FIGS. 29A and 29B. It will be appreciated that the hook itself may be a member such as metal that generates a distinguishable characteristic sound.

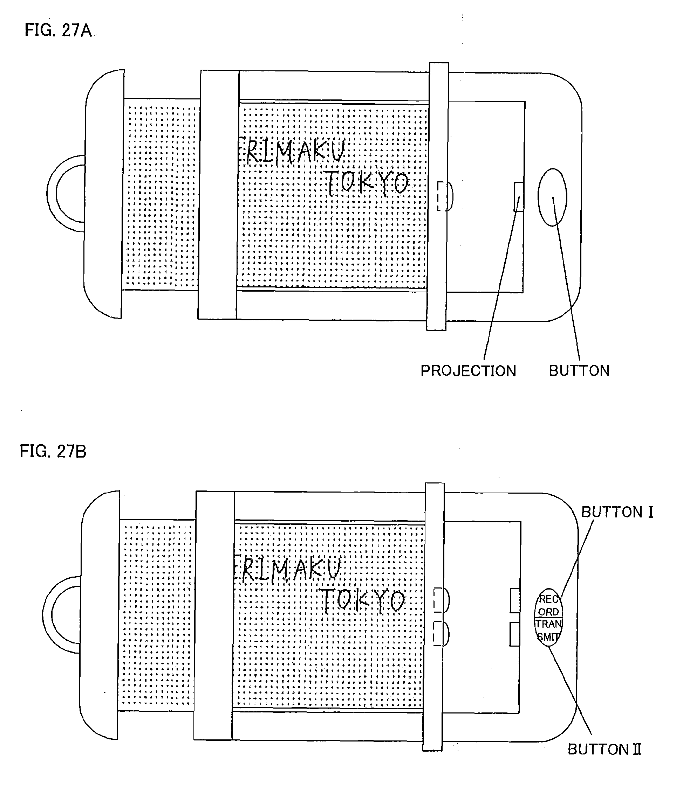

FIGS. 27A and 27B are diagrams illustrating a case in which a button is provided on the right frame of the main body.

In FIGS. 27A and 27B, the right frame of the main body has one button. In this embodiment, a projection is out while the button is being pressed. When a user releases the hand from the button, the projection is withdrawn.

A user, first, slides the display panel to the left side to erase the trail. When erasing completes, the user slides the display panel to the right side to return to the original position. Here, if the user presses the button, the projection and the catching part engage and generate a collision sound of a predetermined frequency. In this way, the trail can be stored or transmitted.

FIG. 27B is a diagram illustrating a case in which a record button and a transmit button are provided. In this embodiment, a button 1 named "Record," and a button 2 named "Transmit" are provided. Corresponding projections are provided for respective buttons in the right frame, and, when each button is pressed, the corresponding projection is out during pressing.

Similarly to FIG. 27A, the user, after erasing the trail, slides the display panel to the right side to return to the original position. Here, the projection collides with the catching part to generate a collision sound. Collision sounds of different frequencies are respectively generated between when the projection of button 1 is collided and when the projection of button 2 is collided. The sound recognition unit embedded in the scanner pen which is not shown in the drawings recognizes each sound, and, when a collision sound corresponding to the button 1 is recognized, stores the trail information to the storage unit of the scanner pen, and, when a collision sound corresponding to the button 2 is recognized, transmits the trail information from the transmitting unit to the information processing device. Also, when both buttons are pressed down, the trail information is stored as well as transmitted to the information processing device.

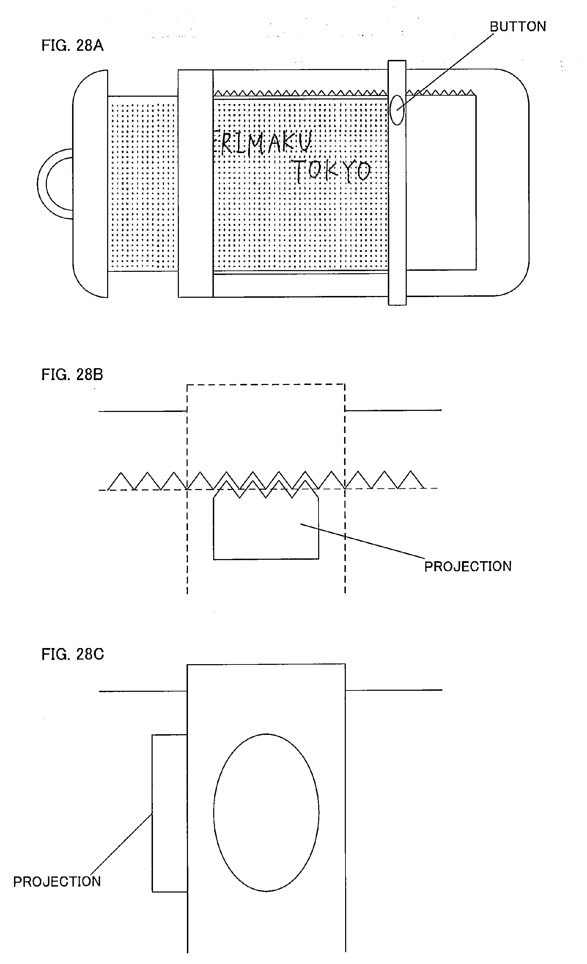

FIGS. 28A to 28C are diagrams illustrating a case in which the handwriting input board has trenches.

In this embodiment, as shown in FIG. 28A, a button is provided on the right frame of the display panel. As shown in FIG. 28B, a projection is provided on the reverse side of the button. Also, the main body is provided with trenches at a portion where the main body contacts with the upper side of the display panel. A trench may also be provided on the projection.

When the user erases a trail, the trenches of the main body collide with the projection, which generates a collision sound of a predetermined frequency. If the trenches provided on the main body are gradually changed the width and depth thereof, the sound (tone color) generated by the user also gradually changes while the user is sliding the display panel. In this way, the sound recognition unit can recognize which area is being erased and instructs to the storage unit and/or transmitting unit which area is to store and/or transmit.

In a state in which the display panel is closed, even when the width and depth of the trenches provided on the main body are constant, if the button is pressed down first, the sound recognition unit can determine the subject area depending on how many sounds are recognized until the button is released.

If a projection such as FIG. 28C comes out when the button is pressed down while the user is sliding the display panel, the time when the display panel opens can be recognized and where the subject area starts can be determined.

It should be noted that, while not shown in the drawings, a projection of material different from the one of the upper side may be provided on a portion of the main body where the main body contacts the lower side of the display panel. In this way, by determining the frequency of the sound and defining the button on the upper side as for storage and the button on the lower side as for transmitting, an instruction of storing and/or transmitting can be given.

According to the embodiments of FIGS. 26A to 29B, only by generating sounds when the user erases the trail information, the trail information can be stored in the scanner pen or transmitted to the information processing device. Therefore, without performing a complicated operations such as pressing buttons many times, the user can easily transmit and store necessary trail information to the information processing device.

Also, while visibly erasing the trail of the scanner pen, an operation sound caused by operation of the slide mechanism is generated. Thus, the sound is generated without using a battery at all and the scanner pen electronically recognizes this sound. As an electronic/electric mechanism is not required for the handwriting input board side, a thin and light handwriting input board can be easy provided with low costs.

It should be noted that the invention is not limited to this and sounds can be generated by any methods as long as the method is a mechanism that generates sounds including electronic methods. Further, an operation instruction may be wirelessly performed.

### <Information Processing System Using Handwriting Input Board>

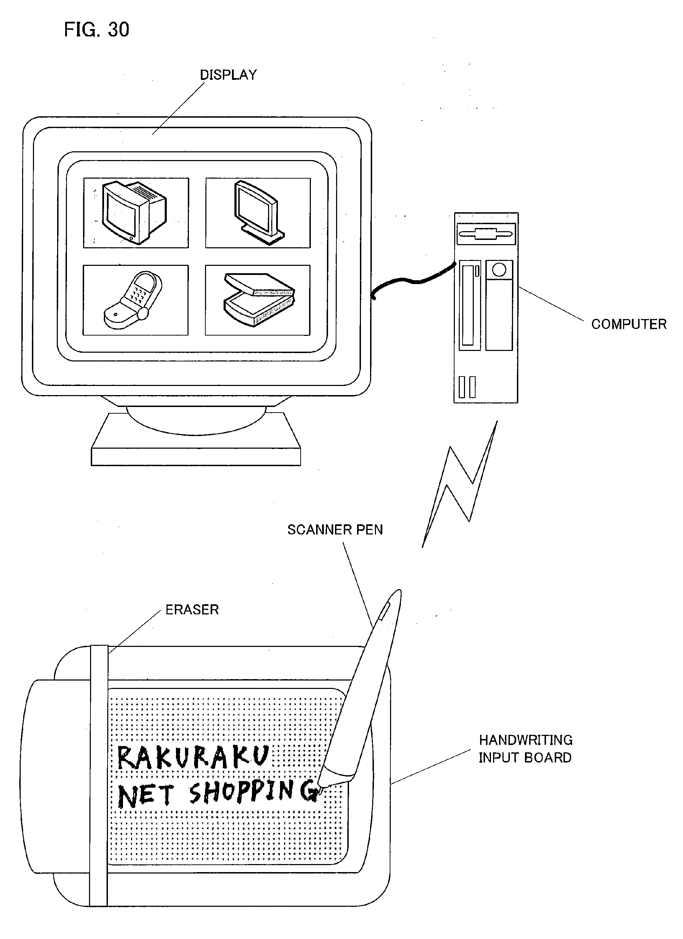

FIG. 30 is a diagram illustrating an information processing system using the handwriting input board of the invention.

This information processing system comprises a handwriting input board, a scanner pen, and an information processing device.

The user writes in a content corresponding to desired processing on the handwriting input board using the scanner pen. In this embodiment, "Rakuraku Net Shopping" is written. Next, the user performs an operation such as pressing the transmit button of the scanner pen, or generating a sound when erasing a trail. Then, the transmitting unit of the scanner pen transmits the trail information to the information processing device (a computer). The computer analyzes the received trail information, and performs processing corresponding to the analysis result. In this embodiment, the computer accesses a Web site of "Rakuraku Net Shopping," and displays the Web site on the display. In this way, the user can browse the Rakuraku Net Shopping site and shop on the Net.

It should be noted that the invention is not limited to this, and can be used for executing any instruction commands and inputting and outputting any information, such as accessing to a variety kinds of Web sites and distributing sounds and motion pictures.

According to this, only by writing an instruction command to be executed and information to be input and output on the handwriting input board by hand and transmitting to the information processing device, corresponding instruction command can be executed and information can be input and output. Therefore, without performing a complicated operation such as inputting on a keyboard, a user can perform desired processing only with a thin and light input board and a scanner pen.

### <Thin Client System Using the Handwriting Input Board>

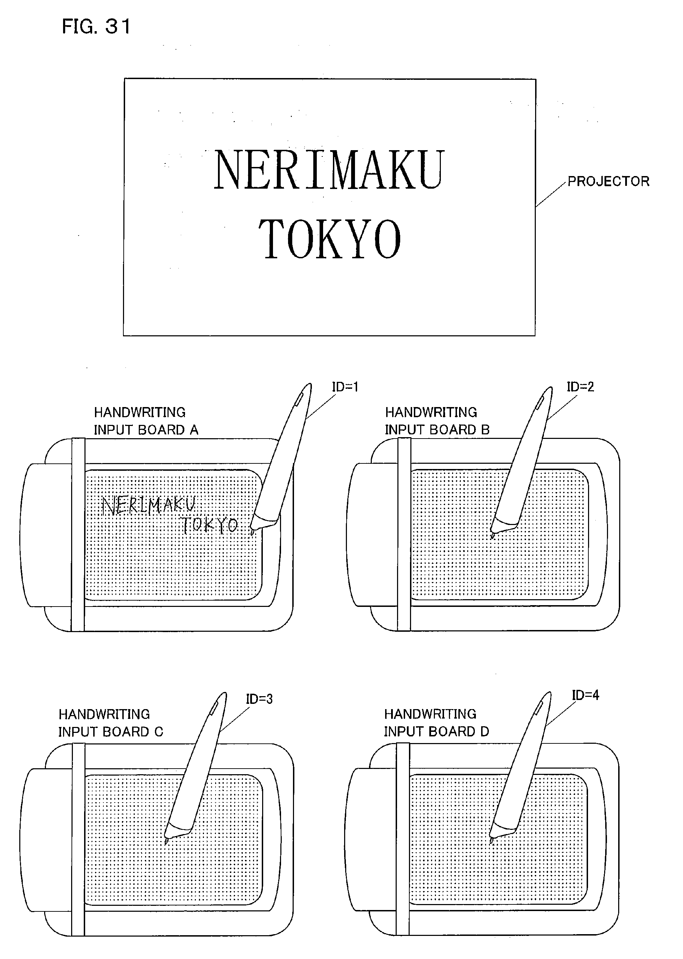

FIG. 31 is a diagram illustrating a thin client system using the handwriting input board of the invention.

The thin client refers to a general term of a system in which a client terminal that a user uses has only minimum functions and a server manages resources such as application software and files.

In this embodiment, a server (an information processing device) which is not shown in the drawings is connected with a plurality of scanner pens over a network. Also, a plurality of handwriting input boards are prepared. The server and each scanner pen are connected by a wireless method such as Bluetooth (registered trademark) and infrared light, or wired method such as an USB.

When a user writes in the handwriting input board using the scanner pen, the dot patterns of the display panel are read by the scanner pen, and converted to X and Y coordinate values and/or code values in the scanner pen. The X and Y coordinate values and/or code values are analyzed in the hard disc device of the server, and, based on which, the trail is recognized. Then, a projector and display that are connected with the server displays the information corresponding to the trail.

Also, each scanner pen is given an ID (identification). When the X and Y coordinate values and/or code values of the dot patterns read by the scanner pen are transmitted to the server, the ID data of the scanner pen is transmitted together. Then, the server can recognize by which scanner pen the transmission was made. For example, if a user of a scanner pen of ID = 1 writes by hand "Nerimaku Tokyo" on the handwriting input board A, the scanner pen of ID = 1 simultaneously transmits the X and Y coordinate values and/or code values of the dot patterns and the ID data. Then, the server recognizes that the transmission was made by the scanner pen of ID = 1, further, analyzes the X and Y coordinate values and/or code values, and recognizes that "Nerimaku Tokyo" is input on the handwriting input board A. Then, "Nerimaku Tokyo" is displayed by the projector. Here, the projector may also display a note to the effect that the handwriting was made by the scanner pen of ID = 1.

In this way, the handwriting input board of the invention can also be used in a thin client system. According to this, for example, in a meeting for brainstorming, if each attendee brings a scanner pen and a handwriting input board, and writes by hand with the scanner pen to make a remark, who made the remark is recognized. Thus, each attendee is not required to bring a computer, which makes the meeting very simple and convenient. Moreover, this system can be utilized for unlimited purposes, such as inputting by a teacher and students in a school class room, remarking on the Net, reception processing, order entry, equipment management, and the like.

### <Handwriting Input Board with Icon Area>

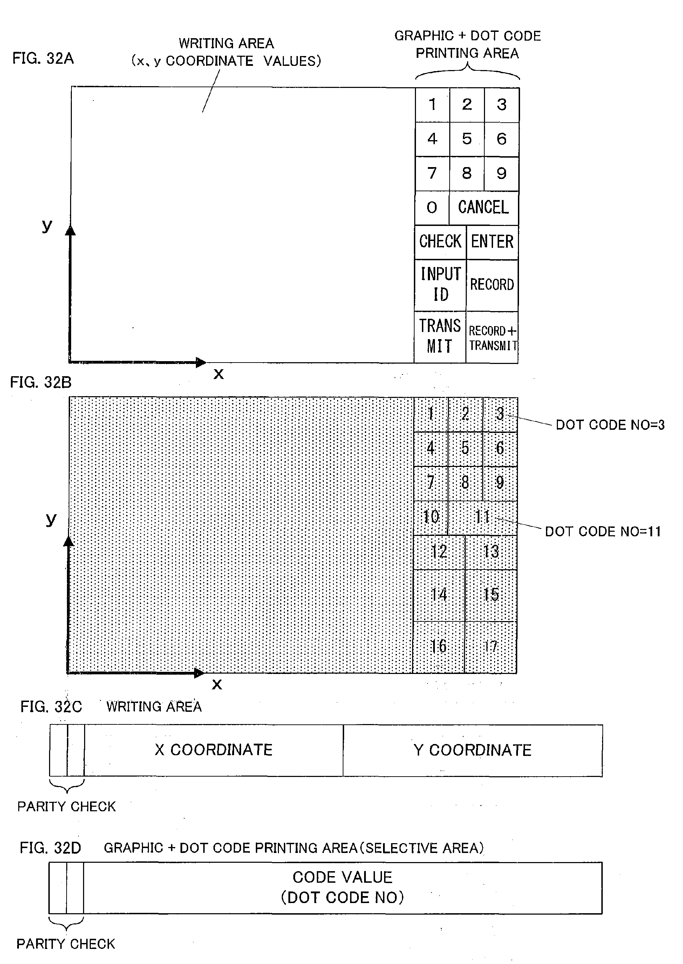

FIGS. 32A to 34D are diagrams illustrating other embodiments of the display panel.

On the display panel of the handwriting input board of the invention, an area other than the writing area can also be provided. As an example, there are those as shown in FIGS. 32A to 33C.

FIGS. 32A to 32D feature a writing area and a graphic + dot code printing area.

Dot patterns including x and y coordinate values and code values are printed on the writing area, in which texts, pictures and the like can be input by handwriting.

Numbers and instruction commands are printed as icons on the graphic + dot code printing area. Each icon has the following meaning.

(1) Input ID: switching to an index number input mode for drawing that has just drawn in the writing area or that is to be drawn. It should be noted that if ID is not input, time information is added to the trail information.

(2) 1-9, 0: inputting an index number.

(3) Cancel: stopping inputting an index number, and canceling the index number input mode.

(4) Enter: storing the input index number.

(5) Check: enabling to check the input index number by sounds. This icon is not necessarily provided.

(6) Record: storing trail information with an index number in the storage medium of the scanner pen. If a record button is provided on the scanner pen side, this icon is not necessarily provided.

(7) Transmit: transmitting trail information with an index number from the scanner pen to an information processing device. If a transmit button is provided on the scanner pen side, this icon is not necessarily provided.

(8) Record + Transmit: storing trail information with an index number in the storage medium of the scanner pen, and further transmitting from the scanner pen to the information processing device. If a record/transmit button is provided on the scanner pen side, this icon is not necessarily provided.

In addition to inputting handwriting in the writing area, a user can easily perform a variety of operations, such as storing the trail in the scanner pen or transmitting the trail to the information processing device, by touching these icons. In this way, the handwriting input board can be more convenient.

FIG. 32B is a diagram illustrating dot patterns. FIG. 32C is a diagram illustrating a dot code format in the writing area. FIG. 32D is a diagram illustrating a dot code format in the graphic + dot code printing area.

As shown in FIG. 32C, the writing area registers dot codes that signify X coordinates and Y coordinates. In this way, the positions where a user writes in with the scanner pen can be recognized.

On the other hand, the graphic + dot code printing area registers dot codes that signify code values as shown in FIG. 32D. The code value refers to a dot code number, and different dot code numbers are registered in respective icons. For example, "3" icon has a dot code No. 3, and "Cancel" icon has a dot code No. 1. In this way, by registering different dot code numbers, if a user touches an icon using the scanner pen, processing corresponding to the icon content is performed.

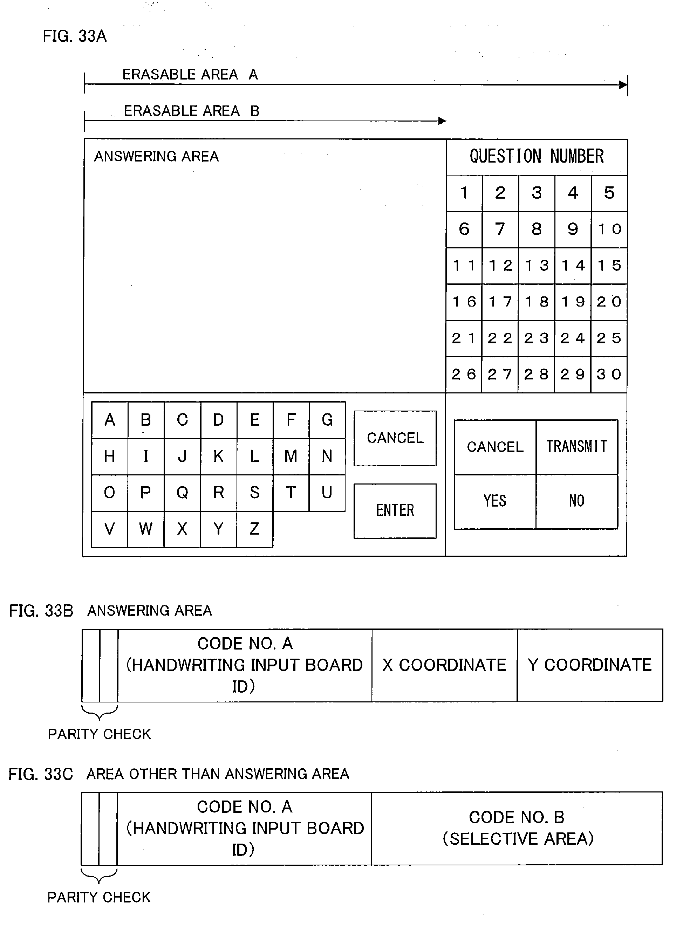

FIGS. 33A to 33C feature icons that are mainly used for tests and examinations at school. Meaning of each icon is as follows:

(1) Answering area: a handwriting input area. Answers for writing questions in tests and the like are written in.

(2) 1-30: checking question numbers.

(3) Cancel: canceling question numbers.

(4) Transmit: transmitting both the answers and question numbers. If a transmit button is provided on the scanner pen side, this icon is not necessarily provided.

(5) Yes: answering, "Yes" to a sound "Overwrite the answer?"

(6) No: answering "No" to a sound "Overwrite the answer?"

(7) A-Z: answering multiple-choice questions.

(8) Cancel: redoing answer.

(9) Enter: entering an answer and storing the answer with the question number.

Also, in "Erasable area A," all the checked trails can be erased. In "Erasable area B," even trails which question numbers are checked can be erased.

FIG. 33B is an explanatory view showing the format of dot codes printed on the answering area.

As described above, the answering area is a handwriting input area. This area registers code No. A, x coordinates, and y coordinates. Code No. A refers to a handwriting input board ID, that is, the ID given to each handwriting input board. The x coordinates and y coordinates respectively refer to positions (coordinate values) on a medium. In this way, if a user reads the answering area using the scanner pen, the ID of the handwriting input board and the coordinate position of the read portion are simultaneously recognized by one reading operation.

FIG. 33C is an explanatory diagram showing the format of dot codes printed on areas other than the answering area, that is, respective icons, including question numbers, Cancel, and Enter.

Code No. A and code No. B are registered in areas other than the answering area. Code No. A refers to a handwriting input board ID, that is, an ID given to each handwriting input board. Code No. B refers to a selective area No., that is, a content of each icon. For example, icon "1" registers a code signifying "1" as a code No. B. In this way, if a user reads out an icon of "1," the fact that the ID of a handwriting input board and question number "1" are checked is simultaneously recognized by one reading operation.

It should be noted that the handwriting input board ID may not be necessarily provided. Also, the dot code formats may have only selective area No. and x and y coordinate values.

Conventionally, question sheets and answer sheets are given out to each person who take a test in a test at school and the like, consuming excessive papers, which poses problems in terms of a global environment, costs, and confidentiality (leaking of personal information). If a handwriting input board is used in the test as in this embodiment, the question sheets are not required, thus, papers to be used can be significantly decreased. In addition, the scanner pen and handwriting input board can be repeatedly used, contributing for protection of the global environment, retaining confidentiality, and suppressing leaking of personal information.

Also, for highly confidential information such as a result of important meeting, the written information can be quickly erased without disposing one by one using a shredder and the like.

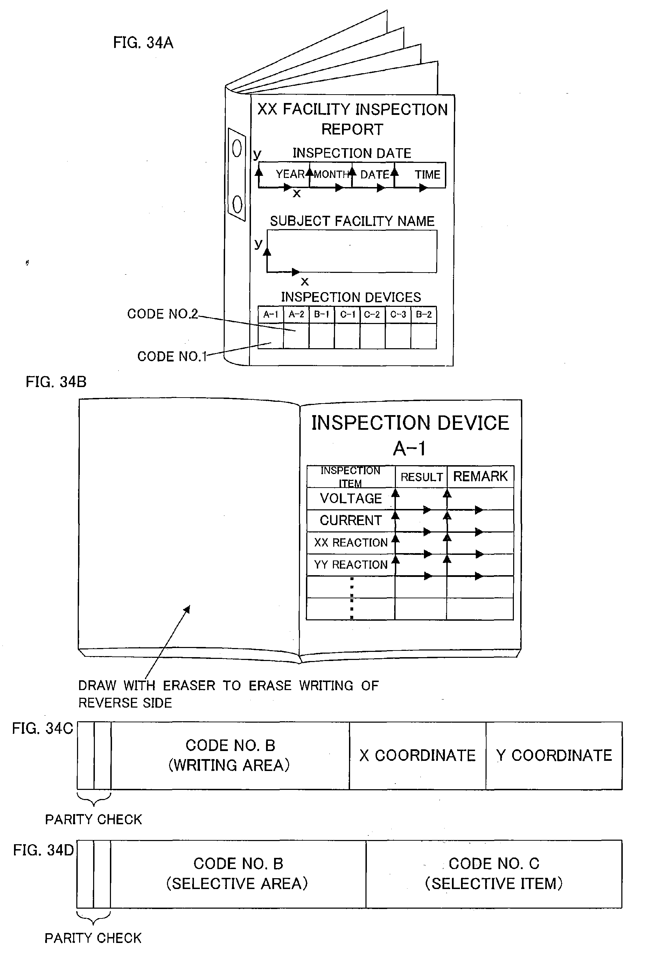

FIGS. 34A to 34D are diagrams illustrating a handwriting input board (sheet) of a booklet style.

As shown in FIG. 34A, the handwriting input board is of a booklet style in this embodiment, and can be carried around by binding many sheets. An eraser is separately provided. If the booklet is an inspection report of a facility, each page is provided with writing areas for writing the inspection date, inspection result, and the like. These writing areas are printed with dot patterns. A user may write in necessary information in each writing area, stores in the scanner pen as necessary, and transmits to an information processing device.

FIG. 34B shows a state in which pages are turned over. In this embodiment, the writing area is provided only on one side (reverse surface) of the sheet. To erase the written content, the user rubs the reverse surface with the separately provided eraser. If an eraser with strong magnetism is used, writings on all pages can be erased. FIG. 34C is a diagram illustrating a dot code format in the writing area. The dot code in each writing area registers a code No. B and an x coordinate and a y coordinate. Code No. B refers to a writing area No, and a different code No is registered in each area. In this way, if a user writes in, the scanner pen recognizes which writing area (for example, "subject facility name") is written in.

FIG. 34D is a dot code format in an area other than the writing area, which is indicated by the code No. B that signifies a selective area No. Code No. C refers to a selective item, and information corresponding to the code No. touched by the scanner pen is input and output and an operation instruction corresponding to the code No. is executed. It should be noted that the handwriting input board ID may be further provided. It will be appreciated that the handwriting input board (sheet) of a booklet style may not be printed as above, and the whole page may be a writing area and only an ID that indicates the page and dot patterns that define x and y coordinates may be provided.

As such, the handwriting input board of the invention can be a booklet style. In this way, the handwriting input board can be used in a case in which writing is desirably performed over a plurality of pages, such as an inspection report, a trip report, and the like.

### Industrial Applicability

The handwriting input board of the invention can be utilized in any use purposes, including inputting by a teacher and students at school classes, remarking on the Net, message boards for family members, drawing toys for children, and meeting at offices, reception processing, inputting texts to computers, entering orders, and the like. It should be noted that, in addition to a thin and light handwriting input board, an accompanying scanner pen which is so small and light that it can be covered in a breast pocket can be used, the invention is extremely portable and can be used by carrying around for controlling equipment and for a variety of investigations and reports.

### Description of Reference Numerals and Signs

- 1: DOT PATTERN
- 2: KEY DOT
- 3: INFORMATION DOT
- 4: REFERENCE GRID POINT DOT
- 5: VIRTUAL POINT
- 6a, 6b, 6c, 6d, 6e: REFERENCE DOT
- 6f, 6g, 6h, 6i, 10: VIRTUAL REFERENCE POINT
- 7: REFERENCE DOT
- 8: FIRST VIRTUAL REFERENCE LINE
- 9: SECOND VIRTUAL REFERENCE LINE

## Claims

1. A handwriting input board comprising:
a display panel on at least some area of which is arranged a dot pattern where coordinate values and/or code values are repeatedly defined, at least part of the some area being provided with a writing area; and
a scanner pen that draws a trail by drawing or touching on the display panel,
wherein the scanner pen, by comprising an optical reading unit that optically reads the dot pattern provided on the display panel and a dot code analysis unit, sequentially images the dot pattern by drawing or touching on the display panel, analyzes the dot pattern by the dot code analysis unit,
outputs the coordinate values and/or code values,
visibly displays the trail that is made by drawing or touching by the scanner pen on the display panel in accordance with a predetermined display method, and comprises an erasure unit to erase the displayed trail.

2. The handwriting input board according to Claim 1, wherein
the dot pattern arranged on the at least some area defines a code value for identifying the display panel in a predetermined area or a whole area and/or a code value for identifying a predetermined writing area.

3. The handwriting input board according to Claim 1, wherein
the dot pattern arranged on the at least some area defines a code value that is associated with an instruction command and/or information in a predetermined area.

4. The handwriting input board according to Claim 1, wherein
on the display panel, the dot pattern that is printed with an ink that absorbs infrared light is arranged at least in an area where the dot pattern is arranged, and an area other than a dot portion where the dot pattern is formed reflects infrared light, and the optical reading unit comprises:
an infrared irradiation unit that irradiates infrared light of a predetermined wavelength;
an infrared filter that transmits only infrared light of a predetermined wavelength range; and
a sensor that can image at least the transmitted infrared light, and images the dot pattern formed on the display panel.

5. The handwriting input board according to Claim 4, wherein
on the display panel, a text, a graph, and an image are superimposingly printed on the dot pattern with an ink that reflects or transmits infrared light.

6. The handwriting input board according to Claim 4, wherein
the display panel is attached with an information input assistance sheet in which:
a dot pattern layer in which the dot pattern is arranged on either one surface side of a transparent sheet is provided; and,
if the dot pattern layer is provided on the other side of the display panel side, a protection layer having a characteristic of transmitting infrared light and visible light is laminated on the transparent sheet.

7. The handwriting input board according to Claim 4, wherein
the display panel is attached with an information input assistance sheet in which:
a dot pattern layer in which the dot pattern is arranged on either one surface side of a transparent sheet is provided;
if the dot pattern layer is provided on the display panel side, the infrared reflection layer is laminated on an upper side of the dot pattern layer, and
if the dot pattern layer is provided on the other side of the display panel side, the infrared reflection layer is laminated on a lower side of the dot pattern layer, and a protection layer that has a characteristic of transmitting infrared light and visible light is laminated on the transparent sheet on the upper side of the dot pattern layer.

8. The handwriting input board according to Claim 7, wherein
the infrared reflection layer is an infrared diffuse-reflection layer.

9. The handwriting input board according to Claim 1, wherein
the display panel is provided with a magnetophoresis display panel in which dispersed fluid comprising magnetic particles and dispersed medium are enclosed,
at least part of the magnetophoresis display panel is the writing area,
a trail drawn by the scanner pen provided with a magnet on a leading end thereof is displayed by migration of the magnet particles, and
the erasure unit erases the trail drawn on the writing area by migration of the magnetic particles by tracing with a magnetic eraser from the reverse side of the magnetophoresis display panel.

10. The handwriting input board according to Claim 9, wherein
the magnetophoresis display panel is formed with at least one microcapsule magnetophoresis display sheet.

11. The handwriting input board according to Claim 10, wherein
at least two of the microcapsule magnetophoresis display sheets are bound by a predetermined method.

12. The handwriting input board according to Claim 9, wherein
the magnetic particles are colored with luminescent material.

13. The handwriting input board according to Claim 1, wherein
the display panel is provided with an electrophoresis display panel in which dispersed fluid comprising pigment particles and dispersed medium is enclosed,
at least part of the electrophoresis display panel is the writing area,
a trail drawn or touched by the scanner pen provided with an electrode on a leading end thereof is displayed by migration of the pigment particles, and
the erasure unit erases the trail drawn on the writing area by migration of the pigment particles by applying voltage.

14. The handwriting input board according to Claim 13, wherein
the electrophoresis display panel is formed with at least one microcapsule electrophoresis display sheet.

15. The handwriting input board according to any one of Claims 9 to 14, wherein infrared reflecting particles are included in the dispersed fluid to diffusely reflect infrared light.

16. The handwriting input board according to Claim 1, wherein
the scanner pen, by further comprising a trail information generation unit,
distinguishes whether coordinate values and/or code values read from a trail drawn by drawing on or touching the display panel by the scanner pen are a trail made by drawing on or touching the writing area or other area by the dot code analysis unit, and
if the trail is made in the writing area, generates trail information by the trail information generation unit.

17. The handwriting input board according to Claim 16, wherein
the scanner pen, by further comprising a storage unit, stores the trail information in a storage medium by the storage unit.

18. The handwriting input board according to Claim 16, wherein
the scanner pen, by further comprising a transmission unit, transmits the trail information to an information processing device by the transmission unit.

19. The handwriting input board according to Claim 18, wherein
the scanner pen further comprises a sound recognition unit that transmits the trail information to the information processing device by the transmission unit when recognizing a predetermined sound, and
the handwriting input board comprises a sound generation unit that generates the predetermined sound when erasing the trail corresponding to the trail information by the erasure unit.

20. The handwriting input board according to Claim 18, wherein
the handwriting input board comprises a slide mechanism; and
a unit that enables to visibly erase a trail of the scanner pen by operation of the slide mechanism as well as generates an operation sound of a predetermined frequency of the slide mechanism, and
the scanner pen, when it detects the operation sound of the predetermined frequency, transmits the trail information to the information processing device via the transmission unit,
whereby it is made it possible to visibly erase the trail as well as to transmit trail information from the scanner pen without providing an electronic mechanism on the handwriting input board side.

21. The handwriting input board according to Claim 19, wherein
the sound generation unit comprises a physical button for generating or not generating a collision sound of the slide mechanism.

22. The handwriting input board according to Claim 19, wherein
the handwriting input board comprises a physical catching part for the slide mechanism,
the sound generation unit generates a predetermined sound that is associated with a region where the trail to be erased by the erasure unit is displayed,
the sound recognition unit recognizes the predetermined sound and transmits the trail information corresponding to the trail displayed in the region associated with the sound to the information processing device via the transmission unit.

23. The handwriting input board according to Claim 16, wherein
the scanner pen, by further comprising an output unit,
distinguishes whether coordinate values and/or code values read from a trail drawn by drawing on or touching the display panel by the scanner pen are a trail made by drawing on or touching the writing area or other area by the dot code analysis unit, and,
if the trail is made in an area other than the writing area, outputs/displays a sound and/or an image corresponding to the coordinate values and/or code values by the output unit.

24. The handwriting input board according to Claim 23, wherein
the scanner pen, by further comprising the trail information analysis unit,
if the trail is made in the writing area, generates trail information by the trail information generation unit, analyzes the trail information by the trail information analysis unit, and outputs/displays a corresponding sound and/or image by the output unit.

25. The handwriting input board according to Claim 16, wherein
the scanner pen, after touching a predetermined area other than the writing area, draws an arbitrary number and/or symbol on the writing area, which is erased by the erasure unit, and, subsequently, draws a trail on the writing area, whereby the trail information generation unit generates the trail information with the trail and the predetermined number and/or symbol as an index.

26. The handwriting input board according to Claim 1, wherein
the scanner pen is provided with, instead of the erasure unit equipped on the handwriting input board, an erasure unit for erasing a trail displayed on the display panel to erase part or all of the trail.

27. The handwriting input board according to Claim 9, wherein
the scanner pen is provided with the eraser on a side edge opposite to the optical reading unit and/or a middle part thereof to erase part or all of the trail.

28. The handwriting input board according to Claim 13, wherein
the scanner pen is provided with the eraser on a side edge opposite to the optical reading unit and/or a middle part thereof to enable erasing part or all of the trail.

29. The handwriting input board according to any one of Claims 1 to 28, wherein
the scanner pen is waterproofed.

30. An information processing system using a handwriting input board comprising:
a display panel on at least some area of which is arranged a dot pattern where coordinate values and/or code values are repeatedly defined, at least part of the some area being provided with a writing area;
a handwriting input board equipped with an erasure unit for erasing a trail displayed on the display panel;
a scanner pen comprising:
an optical reading unit for optically reading the dot pattern provided on the display panel;
a dot code analysis unit for analyzing the dot pattern and outputting the coordinate values and/or code values;
a trail information generation unit that generates trail information from the coordinate values or the coordinate values and code values analyzed by the dot code analysis unit; and
a transmission unit that transmits the trail information or the coordinate values and/or code values; and
an information processing device that is wiredly or wirelessly connected with the scanner pen and comprises a trail information analysis unit for analyzing the trail information,
wherein the optical reading unit sequentially images the dot pattern provided on the display panel by drawing a trail by drawing or touching on the display panel by the scanner pen,
the dot code analysis unit analyzes the dot pattern and outputs the coordinate values and/or code values,
the display panel displays the trail,
the trail information generation unit generates the trail information from the coordinate values and/or code values drawn on the writing area,
the transmission unit transmits the trail information or the coordinate values and/or code values to the information processing device, and
the information processing device recognizes the trail information by the trail information analysis unit, executes an instruction command corresponding to the recognition or the coordinate values and/or code values and/or outputs associated information.

31. The information processing system using the handwriting input board according to Claim 30, wherein
when the storage device is mounted, the information processing unit executes an instruction command or outputs multi-media information corresponding to the coordinate values and/or code values.

32. An information processing system using a handwriting input board, comprising:
a plurality of handwriting input boards each comprising:
a display panel on at least some area of which is arranged a dot pattern where coordinate values and/or code values are repeatedly defined, at least part of the some area being provided with a writing area; and
an erasure unit for erasing a trail displayed on the display panel;
a plurality of scanner pens each comprising:
an optical reading unit for optically reading the dot pattern provided on the display panel;
a dot code analysis unit for analyzing the dot pattern and outputting the coordinate values and/or code values;
a trail information generation unit that generates trail information from the coordinate values or the coordinate values and code values analyzed by the dot code analysis unit; and
a transmission unit that transmits the trail information or the coordinate values and/or code values; and
one or a plurality of information processing devices that are wiredly or wirelessly connected with the scanner pens, each of the information processing device comprising a trail information analysis unit for analyzing the trail information, wherein the information processing device recognizes the trail information transmitted from the transmission unit of any one of the scanner pens and ID of the scanner pen, recognizes the trail information, executes an instruction command corresponding to the coordinate values and/or code values, and/or outputs associated information.

33. The handwriting input board according to any one of Claims 1 to 29 or the information processing system using the handwriting input board according to any one of Claims 30 to 32, formed by arranging a plurality of stream dot patterns arrayed in accordance with the steps of:
disposing a plurality of reference dots sequentially in a line in accordance with a predetermined rule;
providing a first virtual reference line that comprises a straight line, a polygonal line and/or a curved line that connects the plurality of reference dots;
providing at least one second virtual reference line that is defined at a predetermined position from the reference dots and/or the first virtual reference line and comprises a straight line and/or a curved line;
providing a plurality of virtual reference points at predetermined positions on the second virtual reference line; and
disposing an information dot that defines X and Y coordinate values and/or a code value by a distance and a direction from the virtual reference point, at an end point of a vector expressed with the virtual reference point as a start point.

34. The handwriting input board or the information processing system using the handwriting input board according to Claim 33, wherein,
in the stream dot, a reference dot is further provided at a predetermined position, which is a further reference for defining the second virtual reference line and/or defining a direction of the dot pattern and a set of X and Y coordinate values and/or a code value.
